# EUROPÄISCHE PATENTSCHRIFT

(11) **EP 1 243 368 B1**
(45) Veröffentlichungstag und Bekanntmachung des Hinweises auf die Patenterteilung: **18.10.2006**
(21) Anmeldenummer: 02003624.0
(22) Anmeldetag: 16.02.2002
(51) Int. Cl.: B23D 47/04

(54) **Verfahren und Vorrichtung zum Abtransport der mit einer Trennmaschine von stangenförmigem Werkstückmaterial abgetrennten Abschnitte**
Method and device for discharging pieces cut from bar-shaped workpieces by a cutting machine
Procédé et dispositif pour emmener des pièces tranchées d' objets en forme de barres au moyen d'une tronçonneuse

(30) Priorität: 22.03.2001 DE 10114263
(43) Veröffentlichungstag der Anmeldung: 25.09.2002
(73) Patentinhaber: KEURO Besitz GmbH & Co. EDV-Dienstleistungs KG, D-77855 Achern-Gamshurst (DE)
(72) Erfinder: Stolzer, Armin, 77830 Bühlertal (DE)
(74) Vertreter: Blumenröhr, Dietrich

(56) Entgegenhaltungen:
- DE-A- 2 816 497
- DE-A- 2 921 194

## Beschreibung

Die Erfindung betrifft ein Verfahren zum Abtransport der mit einer Trennmaschine von stangenförmigem Werkstückmaterial abgetrennten Abschnitte, wobei das auf einem Maschinentisch aufliegende Material während des Schnittes mit seinem in Vorschubrichtung des Materials hinter der Schnittebene gelegenen, abzutrennenden Abschnitt ausschließlich hinter der Schnittebene zwischen Spannbacken eingespannt wird, sowie eine Vorrichtung zur Durchführung dieses Verfahrens (siehe z.B. DE-A-29 21 194).

Als Trennmaschinen kommen im vorliegenden Fall Bügelsägen, Kaltkreissägen, Bandsägen oder dergleichen in Frage.

Bei bekannten Verfahren und Vorrichtungen der eingangs genannten Art liegt das zu bearbeitende Material auf dem Maschinentisch sowie einer diesem in Vorschubrichtung des Materials vorgeschalteten Zuführeinrichtung auf. Dabei erfolgt der Materialvorschub zwischen den schneidenden Arbeitsgängen durch wenigstens zwei quer zur Materialvorschubrichtung öffen- und schließbare und in Materialvorschubrichtung gegebenenfalls automatisch gesteuert an der Zuführeinrichtung verschiebbare und bis unmittelbar an die Schnittebene verfahrbare Vorschubbacken, die nach dem Materialvorschub und dem Schließen der Spannbacken sofort, spätestens aber vor Beendigung des schneidenden Arbeitsganges geöffnet, um den Betrag des nächsten Werkstückvorschubes von der Schnittebene fort verschoben und wieder geschlossen werden.

Auf diese Weise kann nach Beendigung des schneidenden Arbeitsganges und dem damit einhergehenden Öffnen der Spannbacken sogleich das Material um den Betrag der als nächstes abzuscheidenden Materiallänge vorgeschoben werden, wobei der zuvor abgetrennte Materialabschnitt durch das nachfolgende Material von der Schnittebene forttransportiert wird. Mit einem anderen Verfahren und der dazugehörenden Vorrichtung wird so gearbeitet, dass die Spannbacken die Schnittebene entgegen der Materialvorschubrichtung durchqueren können, um dann das Werkstückmaterial zu ergreifen und es um den Betrag des als nächstes abzuschneidenden Materialabschnittes vorzuziehen, wobei aber auch in diesem Falle während des Schnittes die Spannbacken dann auf jeden Fall in Vorschubrichtung des Materials gesehen hinter der Schnittebene stehen. In diesem Falle können die in Materialvorschubrichtung vor der Schnittebene angeordneten Backen bezogen auf die Materialvorschubrichtung feststehend angeordnet seien oder sich die Vorschubarbeit mit den Spannbacken teilen.

Die Erfindung soll sich auf beide vorstehend skizzierten Arbeitsweisen beziehen.

Bei diesen können dann längere abgetrennte Materialstücke mit einer sich an die Trennmaschine in Vorschubrichtung anschließenden Sortiereinrichtung weiterbehandelt werden, beispielsweise quer zur Vorschubrichtung verschoben und gesammelt werden. Bei kurzen bzw. scheibenförmigen Materialabschnitten ist jedoch eine solche Behandlungsweise wegen der mangelnden Lagestabilität der kurzen Abschnitte nicht möglich, so dass man solche kurzen Abschnitte nur hinter der Trennmaschine verhältnismäßig ungeordnet direkt oder von der Sortiereinrichtung aus in Behältnisse fallenlassen bzw. überbringen kann. Für die Weiterverarbeitung müssen dann diese kurzen Materialabschnitte relativ umständlich von Hand aus den Behältnissen genommen und der Weiterverarbeitung zugeführt werden. Dies genügt nicht mehr modernen Anforderungen, die die automatische und geordnete Anlieferung auch kurzer Materialabschnitte so verlangen, dass diese Abschnitte sogleich auch automatisch der Weiterverarbeitung zugeführt werden können.

Aufgabe der Erfindung ist es daher, Verfahren und Vorrichtung der eingangs genannten Art dahingehend weiter auszubilden, dass sich kurze Materialabschnitte nach dem Trennschnitt gezielt handhaben und sammeln bzw. stapeln lassen, so dass sie in gegebenenfalls auch nach unterschiedlicher Größe geordneter Form bereitgestellt sind, um durch geeignete Mittel beispielsweise in Form von Paletten von der Trennmaschine fortgenommen und der Weiterbearbeitung zugeführt zu werden. Diese Aufgabe soll in möglichst einfacher und platzsparender Weise unter Einsatz der an der Trennmaschine bereits vorhandenen Mittel bewältigt werden.

Ausgehend von einem Verfahren der eingangs genannten Art ist diese Aufgabe erfindungsgemäß dadurch gelöst, dass nach Beendigung des Schnittes der abgetrennte Abschnitt durch die Spannbacken in Materialvorschubrichtung von der Schnittebene fortbewegt sowie um eine quer zur Materialvorschubrichtung gelegene Achse geschwenkt wird derart, dass seine jüngste Schnittfläche im Wesentlichen horizontal gelegen und nach unten gerichtet ist, und dass der Abschnitt anschließend durch die Spannbacken über eine im Wesentlichen vertikal nach unten gerichtete Bewegung auf einer Ablage abgesetzt wird.

Hierzu ist die erfindungsgemäße Vorrichtung derart gestaltet, dass nach Beendigung des Schnittes die Spannbacken gemeinsam mit dem zwischen ihnen eingespannten, abgetrennten Abschnitt entlang einer Führungsbahn in Materialvorschubrichtung von der Schnittebene fort verfahrbar und um eine quer zur Materialvorschubrichtung gelegene Achse schwenkbar sind derart, dass der abgetrennte Abschnitt mit seiner jüngsten Schnittfläche auf einem Ablagetisch durch Öffnen der Spannbacken absetzbar ist, und dass die Spannbacken danach entlang der Führungsbahn wieder in ihre Position neben der Schnittebene zurückfahrbar und der nächstfolgend abzutrennende Materialabschnitt durch die Spannbacken einspannbar ist.

Dabei gilt selbstverständlich, was auch für alle nachfolgend beschriebenen Maßnahmen und Bewegungsabläufe gelten soll, dass sämtliche Arbeitsschritte der betroffenen Maschinenteile auch bezüglich bestimmter Positionen, die jeweils angefahren werden sollen, durch die selbsttätige Steuerung der die Trennmaschine enthaltenden Anlage in gegebenenfalls einstellbarer Weise bestimmt und kontrolliert werden, so dass auf die Tatsache einer derart selbsttätigen Steuerung der einzelnen Abläufe nachfolgend nicht mehr immer im einzelnen hingewiesen wird.

Diese Maßnahmen haben die Wirkung, dass nunmehr bei kurzen Materialabschnitten diese nach Beendigung des Trennvorganges nicht mehr allein durch das nachfolgende Material weitergeschoben und hinsichtlich ihrer Positionierung zahlreichen Zufälligkeiten überlassen werden. Vielmehr bleiben nunmehr die Materialabschnitte in ihrer Einspannung zwischen den Spannbacken und werden von diesen von der Schnittebene fortbewegt und gezielt mit einer vorherbestimmten Positionierung auf einen Ablagetisch gesetzt, so dass sie von dort aus in noch näher zu beschreibender Weise ebenso gezielt und entlang vorherbestimmter Wege weiterbehandelt werden können. Damit ist jede Unordnung von nach der Trennmaschine anfallenden kurzen Materialabschnitten beseitigt, diese vielmehr durch eine vorherbestimmbare Ordnung ersetzt, die es erlaubt, die Weiterbehandlung dieser kurzen Materialabschnitte in zumindest weitestgehend automatisierter Weise vorzunehmen.

Ermöglicht ist dieser Lösungsweg dadurch, dass die Spannbacken nunmehr in der erfindungsgemäßen Weise verfahrbar bzw. beweglich ausgebildet sind und ihnen damit neben der Funktion des Spannens des Werkstückmaterials während des schneidenden Arbeitsganges die weitere Aufgabe des geordneten Abtransportes kürzerer Materialabschnitt übertragen wurde. Damit ist andererseits jedoch die bisher bekannte und nach wie vor für lange Materialabschnitte brauchbare Arbeitsweise nicht beeinträchtigt oder verändert. Denn wenn lange Materialabschnitte abzutrennen sind, kann es bezüglich der Spannbacken bei deren ursprünglicher, bekannter Aufgabe des Spannens des Materialabschnittes neben der Schnittebene bleiben.

Die erfindungsgemäße Bewegung der Spannbacken in Vorschubrichtung des Materials und von der Schnittebene fort kann durch eine geradlinige Bewegung in Materialvorschubrichtung verwirklicht werden, wobei dann die Spannbacken während dieser Bewegung um eine horizontale, quer zur Vorschubrichtung des Materials gelegene Achse derart nach unten geschwenkt werden, dass die - vom Zeitablauf her gesehen - jüngste Schnittfläche des von den Spannbacken gefassten Materialabschnittes nach unten zeigt, so dass dann der Materialabschnitt auf einen in seiner Höhe entsprechend positionierten Ablagetisch abgesetzt werden kann.

Als besonders zweckmäßig hat es sich jedoch erwiesen, dass die Führungsbahn einen sich in Materialvorschubrichtung erstreckenden im Wesentlichen horizontalen Abschnitt, einen sich daran anschließenden bogenförmig nach oben verlaufenden Abschnitt und einen sich an diesen anschließenden im Wesentlichen vertikalen Abschnitt aufweist. Auf diese Weise ist es die Gestaltung der Führungsbahn, die dafür sorgt, dass die Spannbacken zusammen mit dem von ihnen gefassten Materialabschnitt von der Schnittebene der Trennmaschine fortbewegt und durch die Fahrt entlang des bogenförmigen Abschnittes der Führungsbahn um 90° geschwenkt werden. Dabei kann der im Wesentlichen horizontale Abschnitt der Führungsbahn auch so von der Trennmaschine fort ansteigend ausgebildet sein, dass die Spannbacken nicht mit einem gegebenenfalls auf die Höhe des Maschinentisches eingestellten und neben diesem angeordneten Ablagetisch kollidieren können. Die weitere Bewegung der Spannbacken entlang dem vertikalen Abschnitt der Führungsbahn erlaubt es dann, in noch zu beschreibender Weise den Materialabschnitt auf einen Ablagetisch zu setzen, dessen Auflagefläche hinsichtlich seiner Höhe auch dem Niveau des Maschinentisches entsprechen kann, so dass dieser Ablagetisch in ebenfalls noch zu beschreibender Weise auch dann herangezogen werden kann, wenn in konventioneller Form lange Materialabschnitte nach Beendigung des Trennvorganges in Materialvorschubrichtung weiter zu transportieren sind.

Was die Länge des im Wesentlichen horizontalen Abschnittes der Führungsbahn betrifft, so wird diese selbstverständlich derart gewählt, dass die Spannbacken soweit von der Trennmaschine fort bzw. frei kommen, dass sie eine Position erreichen, die die geeignete Bereitstellung des Ablagetisches erlaubt.

Was andererseits die Länge des im Wesentlichen vertikalen Abschnittes der Führungsbahn betrifft, so ist diese im Hinblick auf die Berücksichtigung zweier Gesichtspunkte zu wählen. Der eine Gesichtspunkt ist durch den konstruktiv vorherbestimmten Platzbedarf der Spannbacken gegeben, wenn diese bei der Bewegung entlang dem bogenförmigen Abschnitt der Führungsbahn zusammen mit dem Materialabschnitt nach unten geschwenkt werden. Im Anschluss daran muss für den Fall eines mit dem Maschinentisches niveaugleichen Ablagetisches der vertikale Abschnitt der Führungsbahn ein Verfahren der Spannbacken nach oben solange erlauben, bis die jüngste Schnittfläche des von den Spannbacken gefassten Materialabschnittes höher liegt als die Oberfläche des Ablagetisches, so dass dann der Materialabschnitt durch die Spannbacken auf den nunmehr unter die Spannbacken gefahrenen Ablagetisch gesetzt werden kann, indem die Spannbacken an dem vertikalen Abschnitt der Führungsbahn ein entsprechendes Stück wieder zurück nach unten gefahren werden. Der andere Gesichtspunkt besteht in der gleichzeitigen Berücksichtigung der in Weiterbildung des erfindungsgemäßen Verfahrens gegebenen Möglichkeit, dass von kurzen Materialabschnitten gleicher Art gegebenenfalls mehrere zum Stapel auf dem Ablagetisch aufeinandersetzbar gesetzt werden sollen. Entsprechend der hier gewollten maximalen Stapelhöhe ist die Länge des vertikalen Abschnittes der Führungsbahn zu bemessen. Die insgesamte Länge der vertikalen Führungsbahn ergibt sich also zur Berücksichtigung beider vorstehend genannten Kriterien aus der Addition der für diese jeweils erforderlichen Längen beim vertikalen Abschnitt der Führungsbahn.

Für die praktische Ausführung hat es sich als zweckmäßig erwiesen, dass in Materialvorschubrichtung hinter der Schnittebene mit dem Gestell der Trennmaschine jeder Spannbacke zugeordnet eine Führungsbahn verbunden ist, wobei vorgesehen sein kann, dass die den Spannbacken zugeordneten Führungsbahnen als Schlitze in mit dem Gestell der Trennmaschine verbundenen Kulissenwänden enthalten sind.

Andererseits ist es zweckmäßig, dass die Spannbacken an einem sich im Wesentlichen quer zur Materialvorschubrichtung erstreckenden, außerhalb des Bereiches des maximalen Werkstückquerschnittes gelegenen Träger angeordnet sind. Hierbei kann vorgesehen sein, dass die Spannbacken auf dem Träger angeordnet sind und dass die Längsenden des Trägers je mit einer der den Spannbacken zugeordneten Führungsbahnen in verfahrbarem Eingriff sind. Eine andere Möglichkeit besteht darin, dass die Spannbacken je über eine vertikale Stütze unterhalb des Trägers angeordnet sind und dass die freien unteren Enden der Stützen je mit einer der den Spannbacken zugeordneten Führungsbahnen in verfahrbarem Eingriff sind. Von welcher der beiden Möglichkeiten Gebrauch gemacht wird, ergibt sich aus der jeweiligen Einzelkonstruktion und damit den Gegebenheiten des Einzelfalles. Durch die Aufteilung der Führungsbahn in zwei auf jeder Seite der Spannbackeneinheit angeordnete Führungsbahnen ergibt sich auf jeden Fall eine gegen Kippbewegungen stabile Führung der Spannbackeneinheit und es befinden sich die beiden gleichen Teile der Führungsbahn außerhalb des beim Vorschub eingenommenen Bewegungsbereiches des Stangenmaterials, so dass die normale Arbeit der mit der Trennmaschine verbundenen Anlage bei längeren abzutrennenden Materialstücken keinerlei Einschränkung oder Behinderung erfährt.

Weiter ins einzelne gehend kann im Rahmen der vorbeschriebenen Ausgestaltung vorgesehen sein, dass der verfahrbare Eingriff über an den Längsenden des Trägers bzw. den freien Ende der Stützen drehbar gelagerte und mit den durch die Schlitze gebildeten Wandungen sowie den Kulissenwänden in Wirkverbindung stehenden Rollen gegeben ist.

Um die Fahrbewegung der Spannbacken bzw. der mit ihnen gebildeten Einheit entlang der Führungsbahn zu erzeugen, kann an sich auf hierzu übliche, bekannte Mittel zurückgegriffen werden. Als zweckmäßig hat es sich jedoch erwiesen, dass die Kulissenwände jenseits des oberen Endes des im Wesentlichen vertikalen Abschnittes der Führungsbahn durch eine horizontale, sich quer zur Materialvorschubrichtung erstreckende Brücke miteinander verbunden sind, dass in der Brücke eine motorgetriebene Welle drehbar gelagert ist, dass die Welle auf den den Spannbacken abgewandten Außenseiten der Kulissenwände je ein Umlenkrad für ein entlang der zugeordneten Führungsbahn umlaufend geführtes Zugmittel trägt, und dass mit den Zugmitteln die Längsenden des Trägers bzw. die Enden der Stützen wenigstens mittelbar verbunden sind zur Erzeugung der Bewegung der Spannbacken zwischen ihrer dem Schnitt des Materials zugeordneten Stellung einerseits und der dem Absetzen eines abgetrennten Abschnittes auf dem Ablagetisch andererseits.

Was nun den Ablagetisch für die geordnete Ablage der Materialabschnitte betrifft, so kann hier eine Bauform angewendet werden, die eine heb- und senkbare Oberfläche enthält, damit bei abgesenkter Oberfläche die Spannbacken zusammen mit dem von ihnen gefassten Materialabschnitt genügend Freiheit für ihre Bewegung entlang der Führungsbahn haben, um andererseits den Materialabschnitt bei angehobenem Ablagetisch auf diesem abzusetzen. Als besonders zweckmäßig hat es sich jedoch erwiesen, dass die Oberfläche des Ablagetisches mit der Oberfläche des Maschinentisches fluchtet, und dass der Ablagetisch in Vorschubrichtung des Materials angetrieben horizontal verfahrbar und längs positionierbar ist zwischen einer unmittelbar an den Maschinentisch anschließenden Stellung und einer von diesem einen Abstand aufweisenden Stellung, bei der seine dem Maschinentisch zugewandte Abschlusskante in Materialvorschubrichtung gesehen hinter dem Ende der Kulissenwände steht.

Hier befindet sich also der Ablagetisch mit seiner Oberfläche auf dem Niveau der Werkstückauflage des Maschinentisches. Damit nun die Spannbacken zusammen mit dem von ihnen gefassten Materialabschnitt für die Bewegung entlang der Führungsbahn genügend Bewegungsfreiheit haben, ist der Ablagetisch in die genannte vom Maschinentisch entfernte Position gefahren. Befindet sich dann am Ende der Bewegung die die Spannbacken aufweisende Einheit auf dem vertikalen Abschnitt der Führungsbahn und ist damit gegenüber der Materialebene des Maschinentisches angehoben, wird der Ablagetisch in seine unmittelbar an den Maschinentisch anschließende Stellung und damit unter die Spannbacken gefahren, so dass die Spannbacken den Materialabschnitt auf dem Ablagetisch absetzen können. Anschließend können, was jedoch nicht unbedingt erforderlich ist, die Spannbacken am vertikalen Abschnitt der Führungsbahn wieder etwas nach oben gefahren werden und es wird der Ablagetisch in seine vom Maschinentisch beabstandete Position zurückgefahren, so dass nunmehr die Spannbacken entlang der Führungsbahn wieder auf ihre Position neben der Schnittebene zurückbewegt werden können. Die horizontale Verfahrbarkeit des Ablagetisches in Materialvorschubrichtung erlaubt also im Takt die ungehinderte Bewegung der Spannbacken entlang der Führungsbahn. Für die normale Arbeitsweise der die Trennmaschine enthaltenden Anlage, das heißt also für das Abschneiden längerer Materialstücke besteht jedoch andererseits auch die Möglichkeit, den Ablagetisch dann in seine an den Maschinentisch angrenzende Position oder eine Position zwischen den beiden genannten Extremlagen zu fahren, damit längere Stangenabschnitte auf ihrem Weg von der Schnittebene fort eine ausreichende Unterstützung bzw. Auflage haben.

Die genannte Verfahrbarkeit des Ablagetisches in zwischen seinen beiden Extremstellungen liegende Positionen hat aber auch für das Absetzen kurzer Materialabschnitte noch eine weitere Brauchbarkeit dahingehend, dass nunmehr solche Abschnitte auch in Materialvorschubrichtung gesehen nebeneinander einzeln oder zu Stapeln auf dem Ablagetisch abgesetzt werden können, indem der Ablagetisch entsprechend gesteuert auf unterschiedliche Positionen für das Absetzen der Materialabschnitte eingestellt wird. Daraus ergibt sich wie gesagt die Möglichkeit, Materialabschnitte in Materialvorschubrichtung gesehen nebeneinander auf dem Ablagetisch abzusetzen und damit dessen Oberflächenquerschnitt besser auszunutzen.

Hinsichtlich der konstruktiven Einzelheiten hat es sich als vorteilhaft erwiesen, dass der Ablagetisch durch eine auf einem feststehenden Tischgestell angetrieben hin- und herverfahrbar angeordnete Rollenbahn gebildet ist, deren Rollen um horizontal und quer zur Materialvorschubrichtung gelegene Achsen drehbar sind. Dabei ist es weiterhin von Vorteil, wenn die Rollenbahn eine enge Rollenteilung aufweist, um auch kleineren Materialabschnitten genügend Auflagefläche zu bieten und sie auf der Rollenbahn längs zu fördern.

Damit nun nach dem in erfindungsgemäßer Weise erfolgten Absetzen von Materialabschnitten auf dem Ablagetisch die die Trennmaschine enthaltende Anlage wieder für eine anderweitige Arbeitsweise frei wird bzw. nach Füllen des Ablagetisches mit Materialabschnitten Platz für das Ablegen weiterer Materialabschnitte geschaffen wird, kann in Weiterbildung des erfindungsgemäßen Verfahrens vorgesehen sein, die auf dem Ablagetisch befindlichen Materialabschnitte von diesem fortzuschaffen. Dies kann dadurch geschehen, dass das Tischgestell auf wenigstens einer Seite neben dem Ablagetisch in seiner gegebenenfalls vom Maschinentisch fort verfahrene Position eine Tischplatte sowie einen quer zur Materialvorschubrichtung horizontal motorgetrieben bewegbaren Schieber für die auf dem Ablagetisch abgesetzten Werkstückabschnitte aufweist, und dass der Schieber von einer auf der der Tischplatte gegenüberliegenden Seite vom Ablagetisch beabstandeten Position bis zu einer Position im Bereich der dem Ablagetisch abgewandten Kante der Tischplatte verfahrbar ist. Mit Hilfe dieses Schiebers können also die Materialabschnitte vom Ablagetisch auf die Tischplatte geschoben werden, wobei auch für diesen Schieber vorzusehen ist, dass er im Bereich oberhalb der Tischplatte stufenlos einstellbar bei unterschiedlichen Positionen angehalten werden kann, damit sich Materialabschnitte bzw. mehrere Chargen von Materialabschnitten in Bewegungsrichtung des Schiebers nebeneinander auf der Tischplatte positionieren lassen.

Von der Tischplatte lassen sich dann die Materialabschnitte bzw. die von diesen gebildeten Stapel in konventioneller Weise für ihre weitere Behandlung fortbringen beispielsweise dadurch, dass die Tischplatte in auswechselbarer Form durch eine Palette gebildet ist, die nach ihrer Befüllung in bekannter Weise abtransportiert und durch eine leere Palette ersetzt wird.

Für die Ausbildung des Schiebers ist es zweckmäßig, dass seine jeweils wirksame Fläche (bei beidseits des Ablagetisches angeordneten Tischplatten die beiden wirksamen Flächen des Schiebers) durch eine sich in Materialvorschubrichtung erstreckende Rollenbahn gebildet ist, deren Rollen um vertikal und quer zur Materialvorschubrichtung gelegene Achsen drehbar sind. Auch hier ist es zweckmäßig, wenn die Rollenbahn eine enge Rollenteilung aufweist.

Gleichermaßen kann für die Spannbacken vorgesehen sein, dass eine Spannbacke quer zur Materialquervorschubrichtung feststehend und die andere zum Öffnen und Schließen des Spannzustandes verschiebbar ist. Es besteht jedoch auch die Möglichkeit, dass eine Spannbacke durch eine kurze, quer zur Materialvorschubrichtung gehende Hubbewegung vom Werkstückmaterial lösbar und die andere Spannbacke zum Öffnen und Schließen des Spannzustandes verschiebbar ist. Hier ist durch den Kurzhub der einen Spannbacke vom Werkstückmaterial fort sichergestellt, dass bei der Rückkehr der Spannbacken zur ihrer neben der Schnittebene gelegenen Spannposition die eine Spannbacke nicht mit dem gegebenenfalls inzwischen durch die Vorschubbacken weiter vorgeschobenen Werkstückmaterial kollidieren kann. In Weiterbildung dieser Bauformen kann vorgesehen sein, dass von der feststehenden bzw. der mit kurzem Hub bewegbaren Spannbacke eine sich von der Schnittebene der Trennmaschine fort erstreckende Rollenbahn getragen ist, deren Rollen um vertikal und quer zur Materialvorschubrichtung gelegene Achsen drehbar sind, wobei die vertikale Breite der Rollenbahn der Höhe der zugeordneten Spannbacke und ihre Länge im Wesentlichen der Ausdehnung der Kulissenwände in Materialvorschubrichtung entspricht. Damit schließt sich für das Abtrennen längerer Materialabschnitte an die quer zur Materialvorschubrichtung feststehende bzw. mit einem kurzen Hub bewegbare Spannbacke ein Führungsbahn für den Abtransport abgetrennter Materialabschnitte an, die bei der vorstehend genannten Ausbildung des Schiebers durch diesen ergänzt werden kann, indem dann der Schieber auf eine solche Position gestellt wird, bei der seine Rollenbahn mit der mit der feststehenden Spannbacke verbundenen Rollenbahn fluchtet.

Weitere erfindungswesentliche Merkmale und Einzelheiten ergeben sich aus der nachfolgenden Beschreibung von Ausführungsformen, die auf der Zeichnung dargestellt sind. In der Zeichnung zeigen:
- Figur 1: eine perspektivische Oberansicht der Materialabfuhrseite einer eine Trennmaschine für stangenförmiges Material enthaltenden Anlage;
- Figur 2: eine Seitenansicht der Anlage gemäß Figur 1;
- Figur 3: eine Draufsicht der Anlage gemäß Figur 1;
- Figur 4: eine Schnittansicht gemäß der Schnittlinie IV-IV in Figur 2 bzw. Figur 3;
- Figuren 5: bis 12 die vereinfachte Darstellung des Gegenstandes gemäß Figur 1 zur Veranschaulichung eines Arbeitsspiels beim Abtrennen eines kurzen Werkstückabschnittes;
- Figuren 13 bis 18: einen vergrößerten Ausschnitt des Gegenstandes gemäß Figur 1 zur Veranschaulichung eines Arbeitsspiels beim Abtrennen eines weiteren kurzen Werkstückabschnittes;
- Figur 19: die Darstellung gemäß Figur 1 mit Veranschaulichung der Handhabung langer Werkstückabschnitte;
- Figur 20: eine Einzelheit der Anlage gemäß Figur 1 bis 4 mit einer konstruktiven Variante;
- Figur 21: den Gegenstand gemäß Figur 20 in Seitenansicht, teilweise mit fortgenommenen Abdeckungen.

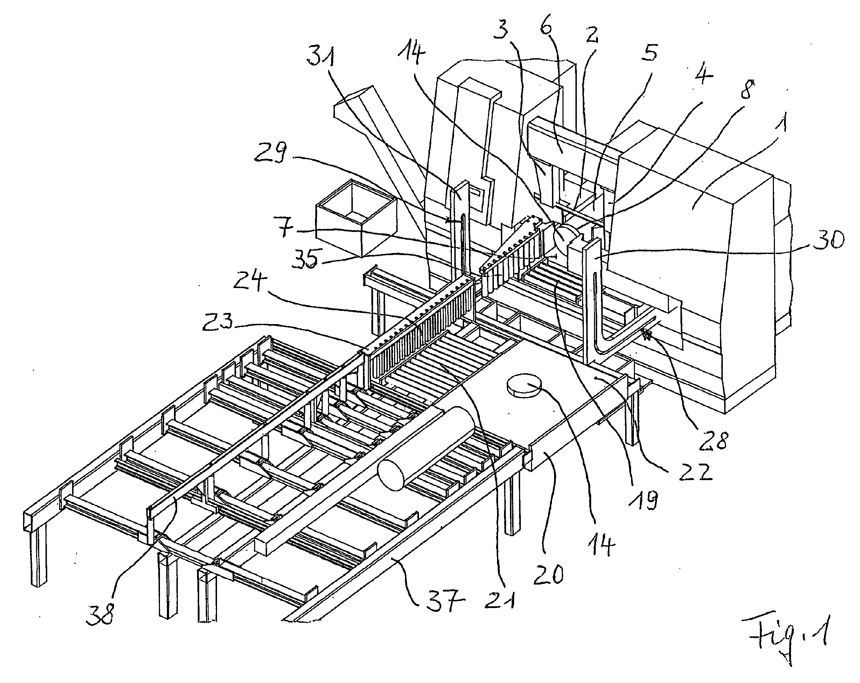

Die Figuren 1 bis 4 veranschaulichen eine Anlage mit einer Trennmaschine 1 in Form einer Horizontalbandsäge, bei der das in bekannter Weise umlaufende Sägeband mit seinem unteren, waagerechten Trum 2 durch Sägebandführungen 3, 4 in die vertikale Schnittebene geschwenkt wird. Die Sägebandführungen 3, 4 sind in horizontal auf den Querschnitt stangenförmigen Werkstückmaterials 5 einstellbarer Weise an einem horizontalen Träger 6 angeordnet, der zur Durchführung des schneidenden Arbeitsganges zusammen mit dem Sägeband und dessen nicht dargestellten, im Gestell der Trennmaschine 1 enthaltenen Umlenkrädern vertikal verfahrbar ist.

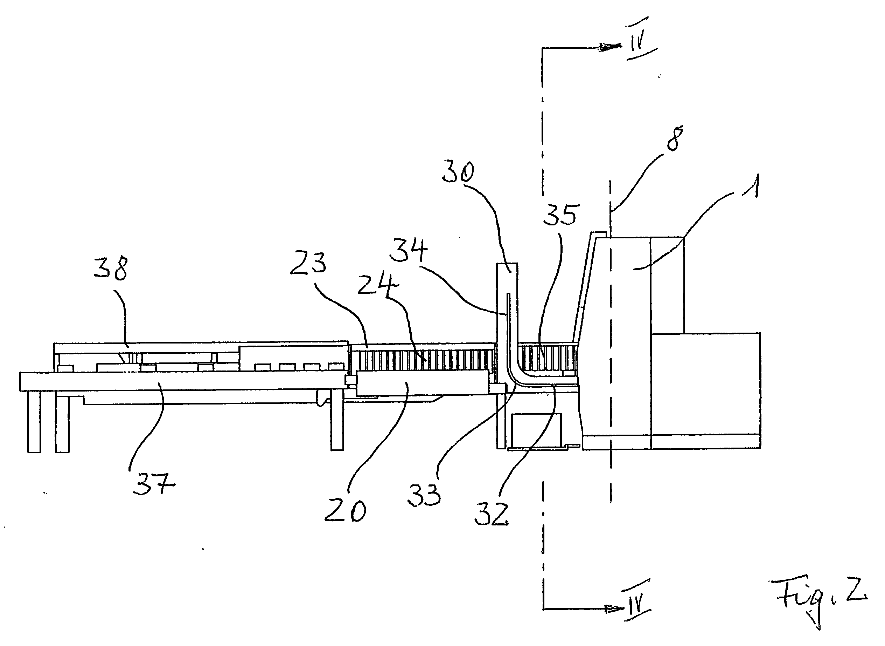

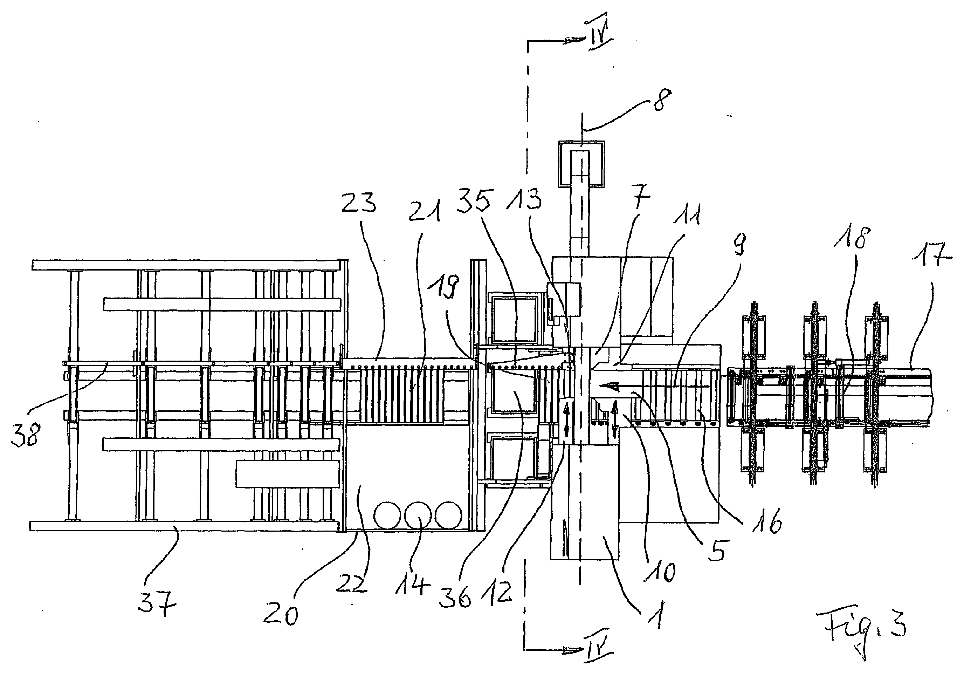

Das Werkstückmaterial 5 liegt im Bereich der Trennmaschine 1 auf einem von dieser gebildeten Maschinentisch 7 auf und wird dort beidseits der in Figur 1 am Werkstückmaterial 5 angedeuteten und in Figur 3 mit einer Strichlinie veranschaulichten Schnittebene 8 während des schneidenden Arbeitsganges durch Spannvorrichtungen festgehalten. Diese Spannvorrichtungen bestehen bezogen auf die in Figur 3 durch den Pfeil 9 angedeutete Vorschubrichtung des Materials 5 vor der Schnittebene 8 aus horizontal und quer zur Vorschubrichtung 9 des Materials öffen- und schließbaren Vorschubbacken 10, 11 sowie bezogen auf die Vorschubrichtung 9 des Materials hinter der Schnittebene 8 aus horizontal und quer zur Vorschubrichtung 9 öffen- und schließbaren Spannbacken 12, 13.

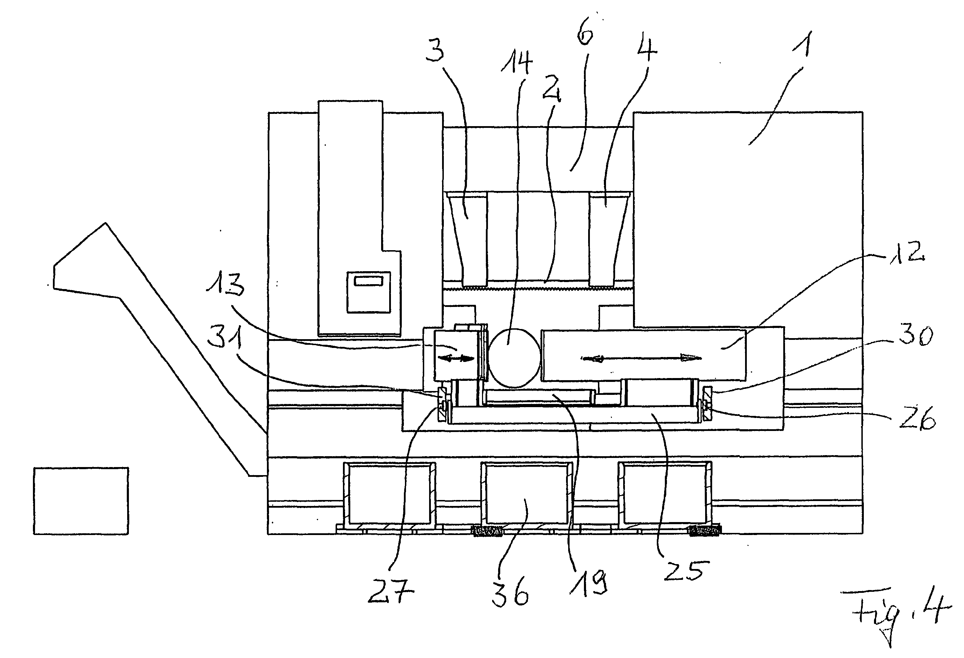

Die Vorschubbacken 10, 11 sind außerdem am Gestell der Trennmaschine 1 parallel zur Materialvorschubrichtung 9 verfahrbar, um den Vorschub des Materials 5 um die Länge des jeweils abzutrennenden Materialabschnittes zu bewirken. Dabei ist der Arbeitsablauf so gestaltet, dass die Vorschubbacken 10, 11 vor Beendigung, vorzugsweise jedoch bereits vor Beginn eines schneidenden Arbeitsganges geöffnet, entgegen der Materialvorschubrichtung 9 um den Längenbetrag des als nächstes abzutrennenden Materialabschnittes zurückgefahren und wieder zum Spannen des Materials 5 geschlossen werden, während der gerade abzutrennende, in den Figuren 1 und 4 mit der Ziffer 14 versehene Materialabschnitt von den Spannbacken 12, 13 gehalten ist. Ist dann der trennende Arbeitsgang beendet und das Sägeband 2 wieder nach oben aus dem Werkstückquerschnitt angehoben, erfolgt der Materialvorschub durch die Vorschubbacken 10, 11 um die Länge des als nächstes abzutrennenden Materialabschnittes.

Dabei kommen bezüglich der Handhabung des vorher abgetrennten Materialabschnittes zwei Möglichkeiten in Frage. Ist, wie insbesondere aus Figur 1 ersichtlich, ein kurzer Materialabschnitt 14 abgetrennt worden, so wird dieser in noch zu beschreibender Weise durch die Spannbacken 12, 13 fortgeräumt, bevor das Material 5 durch die Vorschubbacken 10, 11 um den Betrag des als nächstes abzutrennenden Materialabschnittes vorgeschoben wird. Ist jedoch, wie aus Figur 19 ersichtlich, ein langer Materialabschnitt 15 abgetrennt worden, so werden nach Beendigung des schneidenden Arbeitsganges lediglich die Spannbacken 12, 13 geöffnet und es erfolgt dann der Materialvorschub durch die Vorschubbacken 10, 11, wobei der vorher abgetrennte Materialabschnitt 15 mit weitergeschoben wird, um dann in ebenfalls noch zu beschreibender Weise fortgeräumt zu werden.

In beiden Fällen werden nach dem Vorschub des Materials 5 durch die Vorschubbacken 10, 11 um die Länge des als nächstes abzutrennenden Materialabschnittes die Spannbacken 12, 13 wieder geschlossen und es beginnt für die Vorschubbacken 10, 11 das vorbeschriebene Arbeitsspiel erneut. Dabei ist in diesem Zusammenhang festzuhalten, dass entsprechend dem vorbeschriebenen Arbeitsspiel das Material 5 zumindest vor Beendigung des schneidenden Arbeitsganges, vorzugsweise jedoch während des gesamten schneidenden Arbeitsganges beidseits der Schnittebene 8 sowohl durch die Vorschubbacken 10, 11 als auch durch die Spannbacken 12, 13 gehalten ist.

Wie aus den Figuren 1 bis 4 weiterhin ersichtlich, umfasst die die Trennmaschine 1 enthaltende Anlage auf der Materialzufuhrseite im Anschluss an den Maschinentisch 7 eine vom Gestell der Trennmaschine 1 getragene Rollenbahn 16 für die Auflage des Materials 5 sowie im Hinblick auf Materialstangen großer Länge im Anschluss an die Rollenbahn 16 ein Gestell 17 mit weiteren Rollen 18 für die Materialauflage, wobei der in Materialvorschubrichtung 9 gesehene Abstand der Rollen 18 erheblich größer sein kann als der Rollenabstand innerhalb der Rollenbahn 16. Es versteht sich von selbst, dass sowohl die Rollen der Rollenbahn 16 als auch die Rollen 18 um im Wesentlichen horizontal und quer zur Materialvorschubrichtung 9 gelegene Achsen gegebenenfalls angetrieben drehbar gelagert sind.

Auf der Materialabfuhrseite der die Trennmaschine 1 enthaltenden Anlage schließt sich an den Maschinentisch 7 in dessen Verlängerung zunächst eine vom Gestell der Trennmaschine 1 getragene, kurze Rollenbahn 19 an. Zu dieser und dem Gestell der Trennmaschine 1 mit einigem Abstand folgt dann in Materialvorschubrichtung ein Tischgestell 20, das einen Ablagetisch in Form einer mit der Rollenbahn 19 fluchtenden Rollenbahn 21, quer zur Materialvorschubrichtung neben dieser eine Tischplatte 22 und auf der der Tischplatte 22 gegenüberliegenden Seite neben der Rollenbahn 21 einen horizontal quer zur Materialvorschubrichtung am Tischgestell 20 verfahrbaren Schieber 23 aufweist, dessen dem Ablagetisch 21 zugewandte, wirksame Fläche durch eine sich in Materialvorschubrichtung erstreckende Rollenbahn 24 mit um vertikal quer zur Materialvorschubrichtung drehbaren Rollen gebildet ist. Die den Ablagetisch 21 bildende Rollenbahn ist in Materialvorschubrichtung am Tischgestell 20 durch einen nicht dargestellten Antrieb verschiebbar so, dass sie ausgehend von der aus den Figuren 1 und 3 ersichtlichen Position bis an die Rollenbahn 19 herangefahren, aber auch durch die selbsttätige Steuerung der Anlage verursacht auf zwischen diesen beiden Extremstellungen gelegene Positionen gebracht werden kann.

Wie aus insbesondere den Figuren 1 und 4 weiterhin ersichtlich, sind die Spannbacken 12, 13 mit einem horizontal quer zur Materialvorschubrichtung angeordneten Träger 25 verbunden, der außerhalb des Materialquerschnittes unterhalb der Rollenbahn 19 angeordnet ist. Der Träger 25 befindet sich mit seinen Enden über Rollen 26, 27 in Eingriff mit Führungsbahnen 28, 29, die durch Schlitze von am Gestell der Trennmaschine 1 befestigten Kulissenwänden 30, 31 gebildet sind. Die untereinander gleichen Führungsbahnen 28, 29 weisen, wie dies besonders anhand der Figur 2 veranschaulicht ist, einen sich in Materialvorschubrichtung erstreckenden horizontalen Abschnitt 32, einen sich daran anschließenden bogenförmig nach oben verlaufenden Abschnitt 33 und einen sich an diesen anschließenden vertikalen Abschnitt 34 auf.

Durch diese Gestaltung besteht die Möglichkeit, die Spannbacken 12, 13 zusammen mit dem von ihnen gefassten Materialabschnitt 14 von der Schnittebene 8 fort und unter Drehung um 90° nach oben zu fahren, um anschließend den Materialabschnitt 14 mit seiner jüngsten Schnittfläche auf dem Ablagetisch 21 abzusetzen. Dabei erfolgt der Fahrantrieb für den Träger 25 und damit die Spannbacken 12, 13 durch an den Kulissenwänden 30, 31 angebrachte, hier nicht dargestellte und ebenfalls in die automatische Steuerung der die Trennmaschine 1 enthaltenen Anlage einbezogene Antriebsmittel an sich bekannter Art, für die später ein Beispiel noch anhand der Figuren 20 und 21 näher erläutert wird.

Was die einzelnen Abschnitte 32 bis 34 der Führungsbahnen 28, 29 betrifft, so ist die Länge des Abschnittes 32 so zu wählen, dass die Spannbacken 12, 13 genügend von der Trennmaschine 1 freikommen, um dann die durch den bogenförmigen Abschnitt 33 der Führungsbahnen 28, 29 bedingte Schwenkbewegung kollisionsfrei ausführen zu können. Andererseits ist die Länge des Abschnittes 34 der Führungsbahnen 28, 29 so zu wählen, dass die Spannbacken 12, 13 zusammen mit dem von ihnen gefassten Werkstückabschnitt 14 nach oben genügend Abstand von der durch den Ablagetisch 21 gegebenen Oberflächenebene erhalten.

Damit die Spannbacken 12, 13 zusammen mit ihrem Träger 25 die geschilderte Bewegung entlang den Führungsbahnen 28, 29 von der Trennmaschine 1 fort kollisionsfrei ausführen können, ist die den Ablagetisch 21 bildende Rollenbahn zunächst in die aus den Figuren 1 und 3 ersichtliche, am weitesten von der Trennmaschine 1 entfernte Position zurückgefahren. Befinden sich dann die Spannbacken 12, 13 mit ihrem Träger 25 auf dem durch den vertikalen Abschnitt 34 gebildeten Teil der Führungsbahnen 28, 29, kann die den Ablagetisch 21 bildende Rollenbahn in Richtung auf die Trennmaschine 1 unter die Spannbacken 12, 13 und das von diesen gefasste Materialstück 14 gefahren werden. Nunmehr werden die Spannbacken 12, 13 mit ihrem Träger 25 entlang dem vertikalen Abschnitt 34 der Führungsbahnen 28, 29 solange nach unten gefahren, bis die jüngste Schnittfläche des Materialabschnittes 14 auf der Oberfläche des Ablagetisches 21 aufliegt. Danach werden die Spannbacken 12, 13 geöffnet, eventuell an dem vertikalen Abschnitt 34 der Führungsbahnen 28, 29 etwas nach oben gefahren und es wird nunmehr die den Ablagetisch 21 bildende Rollenbahn zusammen mit dem auf ihr abgelegten Materialabschnitt 14 in die aus den Figuren 1 und 3 ersichtliche Position zurückgefahren. Damit ist für die Spannbacken 12, 13 und ihren Träger 25 der Weg wieder frei, um in die aus den Figuren 1 bis 4 ersichtliche Position neben der Schnittebene 8 zurückzufahren und dort das als nächstes abzutrennende, durch die Vorschubbacken 10, 11 inzwischen vorgeschobene Materialstück vor Beginn des nachfolgenden Trennschnittes zu spannen.

Während nun dieser nächste Trennschnitt erfolgt, kann der auf dem Ablagetisch 21 befindliche Materialabschnitt durch Bewegung des Schiebers 23 quer zur Materialvorschubrichtung auf die Tischplatte 22 in eine durch die Steuerung des Schiebers 23 vorherbestimmte Position geschoben werden, so dass der Ablagetisch 21 wieder frei ist. Es besteht jedoch auch die Möglichkeit, den Materialabschnitt auf dem Ablagetisch 21 zu belassen, um auf diesem bzw. neben diesem nachfolgend weitere Abschnitte abzusetzen, die dann anschließend gemeinsam mit Hilfe des Schiebers 23 auf die Tischplatte 22 gebracht werden. Dabei kann der Hub des Schiebers 23 zu unterschiedlichen Endpositionen derart gesteuert werden, dass im Ergebnis auf der Tischplatte 22 quer zur Materialvorschubrichtung mehrere Materialabschnitte bzw. sich in Materialvorschubrichtung erstreckende reihen von Materialabschnitten nebeneinander zu liegen kommen.

In den Figuren 1 und 3 ist der Schieber 23 in einer Zwischenposition dargestellt, die in noch zu beschreibender Weise der seitlichen Führung von langen Materialabschnitten dienen kann. Werden dagegen kurze Materialabschnitte 14 auf die vorbeschriebene Art von der Schnittebene 8 fort auf den Ablagetisch 21 gebracht, befindet sich der Schieber 23 in einer vom Ablagetisch 21 bis über die Kulissenwand 31 hinaus entfernten Position, damit die Spannbacken 12, 13 zusammen mit ihrem Träger 25 ungehindert entlang den Führungsbahnen 28, 29 verfahren werden können.

Wie insbesondere aus Figur 4 ersichtlich, ist außerdem bei den Spannbacken 12, 13 die Anordnung so getroffen, dass die Spannbacke 13 hinsichtlich ihrer gegenüber dem Material 5 wirksamen Spannfläche feststehend angeordnet ist oder mit einer nur sehr kurzen Hubbewegung vom Material freikommen kann, während die Spannbacke 12 quer zur Materialvorschubrichtung in nicht näher dargestellter bekannter Weise die Bewegung zum Öffnen und Schließen des Spannzustandes ausführt. Dabei ist außerdem zur besseren Führung langer abzutrennender Materialabschnitte an der Spannbacke 13 eine sich in Materialvorschubrichtung von der Schnittebene forterstreckende Rollenbahn 35 getragen, deren Rollen um vertikal und quer zur Materialvorschubrichtung gelegene Achsen drehbar sind. Wie insbesondere aus Figur 1 ersichtlich, kann für die Führung langer Materialabschnitte durch entsprechende Einstellung des Schiebers 23 dann eine miteinander fluchtende Position der Rollenbahnen 24 und 35 hergestellt werden.

In dem Zwischenraum zwischen dem Gestell der Trennmaschine 1 und dem Tischgestell 20 lassen sich Auffangbehälter 36 insbesondere unterhalb des Endes der Rollenbahn 19 positionieren für sich eine bekannte Arbeitsweise der die Trennmaschine 1 enthaltenden Anlage dahingehend, dass kürzere Materialabschnitte nicht in der geschilderten Weise durch die Spannbacken 12, 13 fortgeschafft sondern mit Vorschub des Materials 5 für den nächsten schneidenden Arbeitsgang auf die Rollenbahn 19 geschoben und durch Antrieb der Rollenbahn 19 in Materialvorschubrichtung abgeworfen werden sollen.

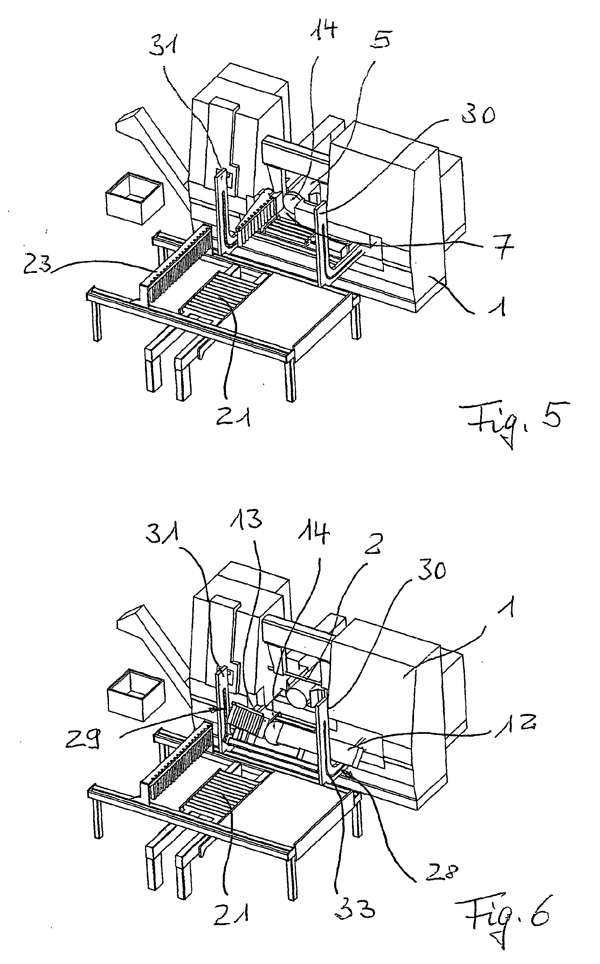

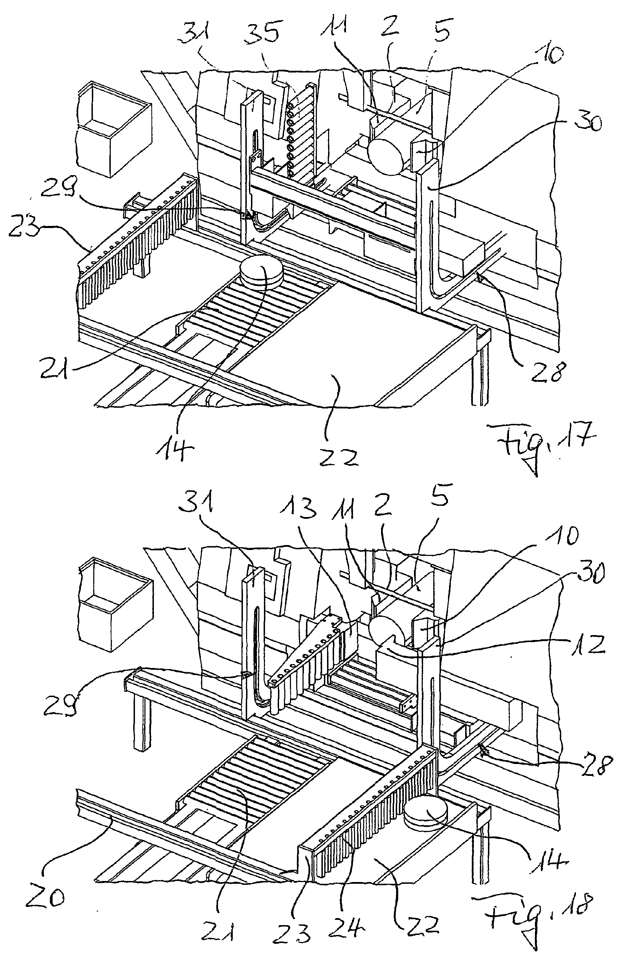

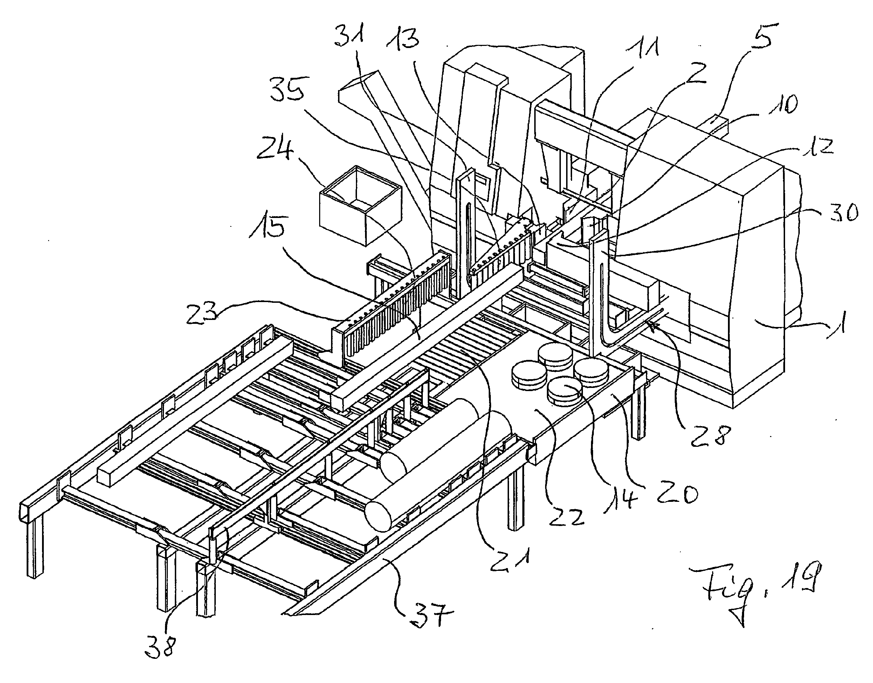

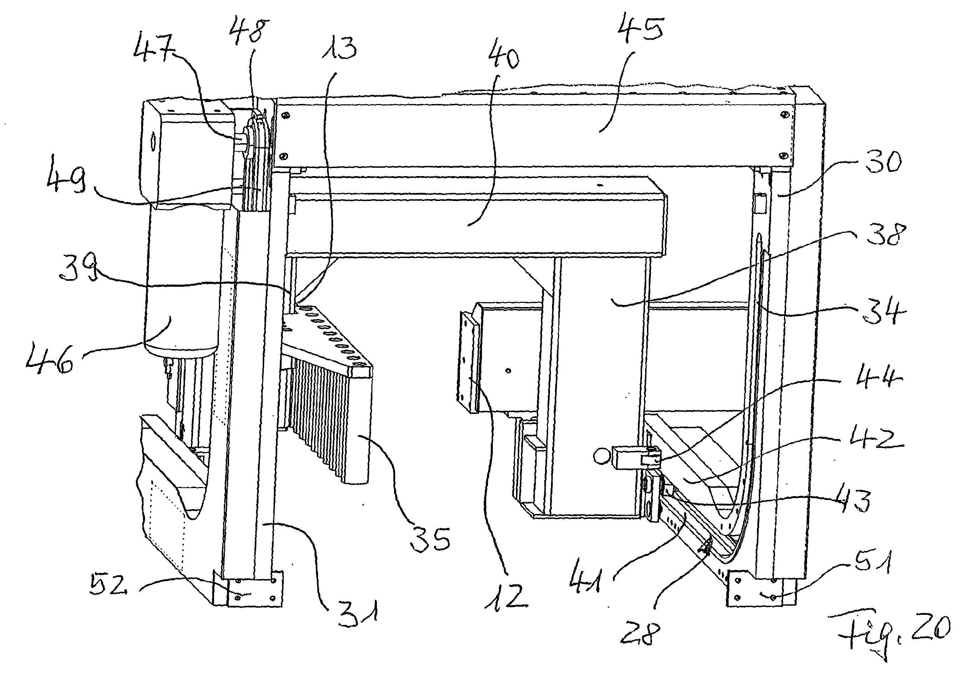

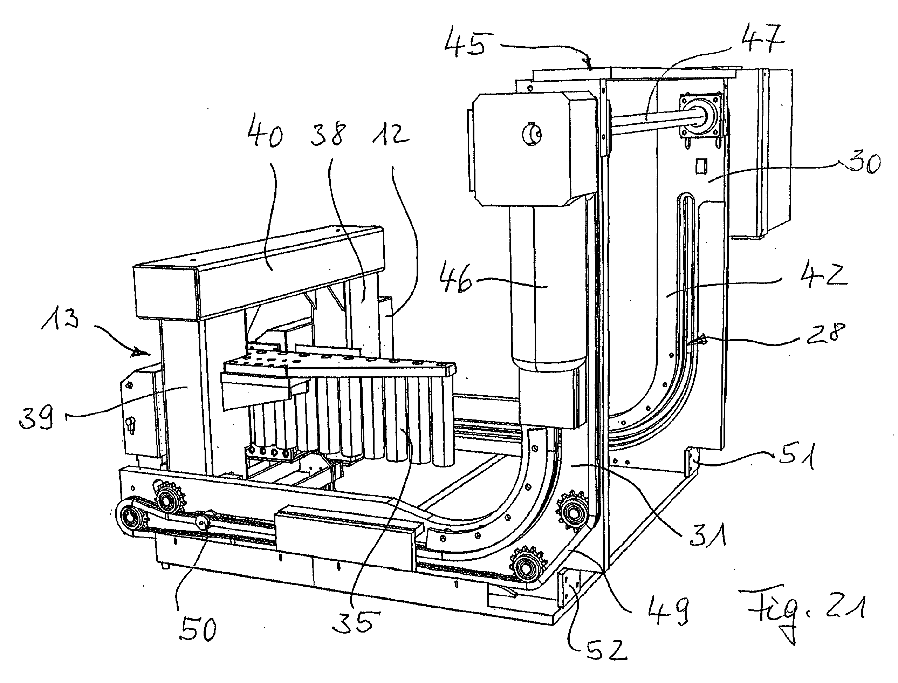

Nachfolgend wird die vorstehend geschilderte, erfindungsgemäße Arbeitsweise der Spannbacken 12, 13 zum Abtransport kurzer Materialabschnitte anhand der Figuren 5 bis 18 noch einmal in ihren einzelnen Schritten veranschaulicht, wobei die Figuren 5 bis 12 der Darstellung gemäß Figur 1 in auszugsweiser Form und die Figuren 13 bis 18 einer vergrößerten Ausschnittdarstellung aus Figur 1 entsprechen.

Gemäß Figur 5 ist der Zustand ersichtlich, bei dem durch das Sägeband 2 gerade ein kurzer Materialabschnitt 14 von der Materialstange 5 abgetrennt ist, der schneidende Trum 2 des Sägebandes also auf der Oberfläche des Maschinentisches 7 angekommen ist. Der Ablagetisch 21 befindet sich in der vom Gestell der Trennmaschine 1 entfernten Position und der Schieber 23 hat einen solchen Abstand von dem Ablagetisch 21, dass er von dort aus gesehen jenseits der Kulissenwand 31 steht.

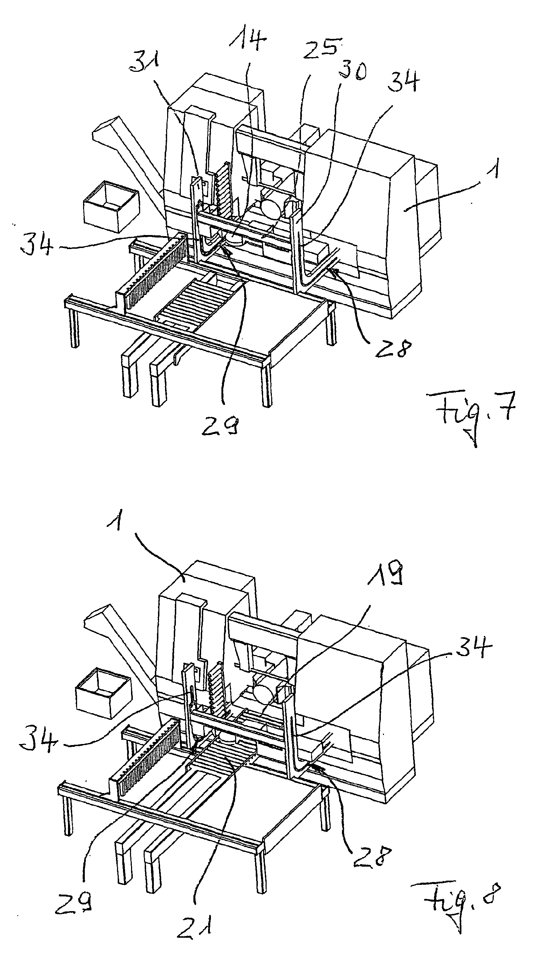

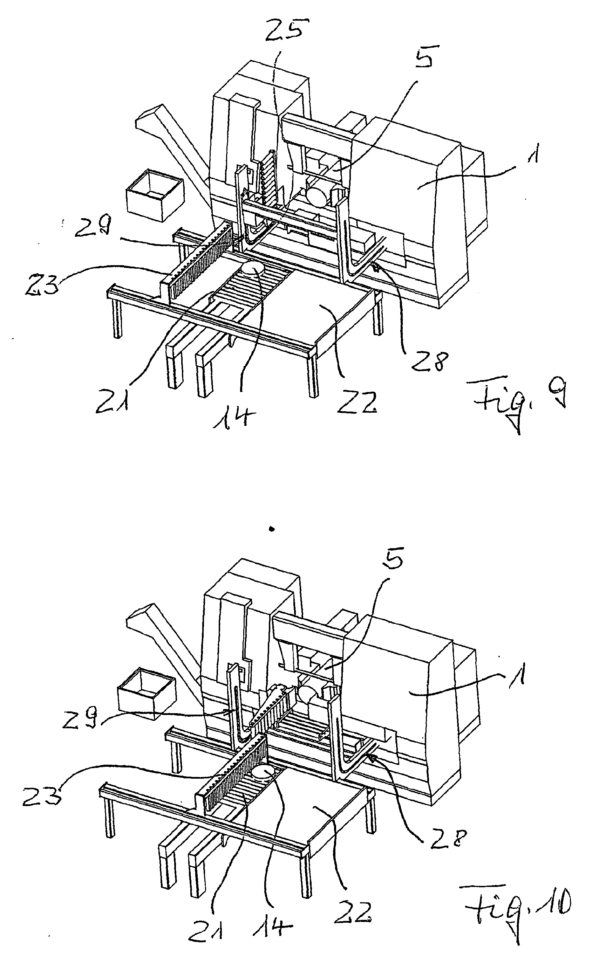

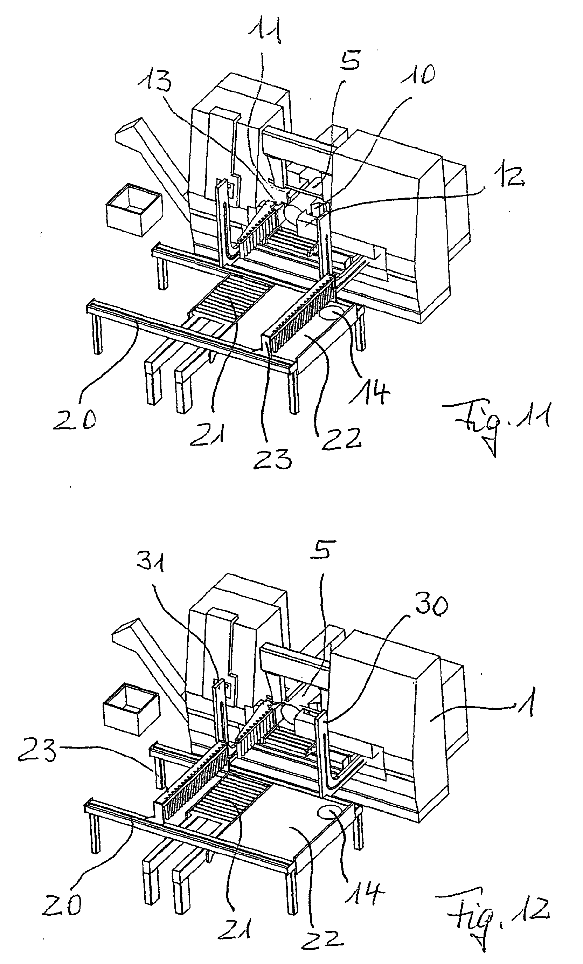

Nunmehr setzen sich die den Materialabschnitt 14 haltenden Spannbacken in Materialvorschubrichtung 9 entlang den von den Kulissenwänden 30, 31 gebildeten Führungsbahnen 28, 29 in Bewegung und werden vermöge des bogenförmigen Abschnittes 33 der Führungsbahnen 28, 29, wie aus Figur 6 ersichtlich, geschwenkt so, dass die jüngste Schnittfläche des Materialabschnittes 14 beginnt, eine nach unten weisende Position einzunehmen. Am Ende dieser Fahrbewegung, wie sie aus Figur 7 ersichtlich ist, stehen dann die Spannbacken 12, 13 zusammen mit ihrem Träger 25 am vertikalen Abschnitt 34 der Führungsbahnen 28, 29 soweit nach oben verschoben, dass, wie aus Figur 8 ersichtlich, nunmehr der Ablagetisch 21 entgegen der Materialvorschubrichtung 9 bis an die kurze Rollenbahn 19 herangefahren werden kann.

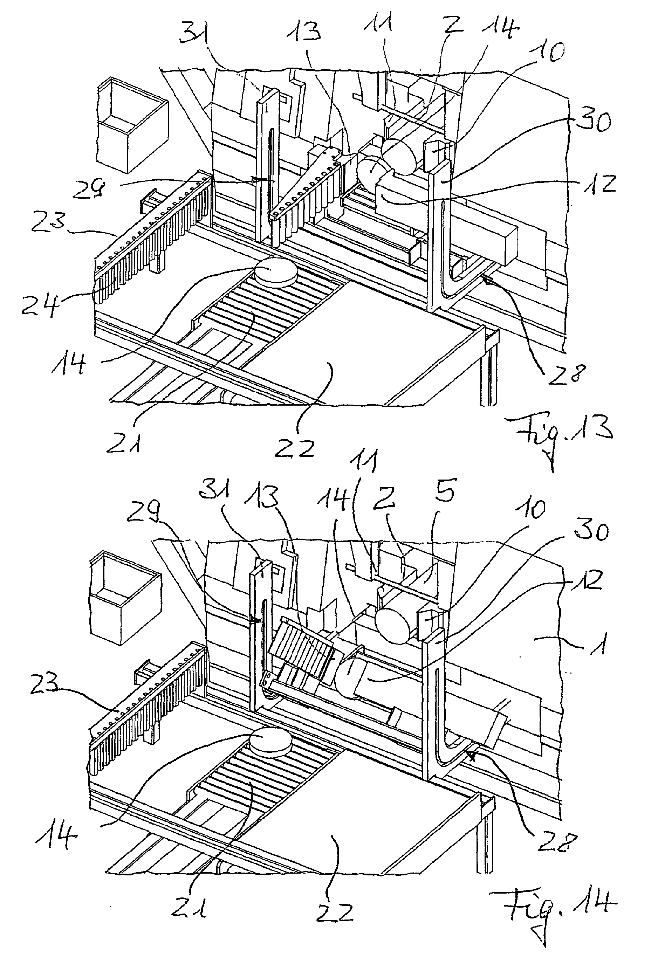

Nunmehr können die Spannbacken 12, 13 automatisch gesteuert mit ihrem Träger an dem vertikalen Abschnitt 34 der Führungsbahnen 28, 29 nach unten fahren und den Materialabschnitt 14 auf dem Ablagetisch 21 absetzen. Anschließend werden die Spannbacken 12, 13 geöffnet, um den Materialabschnitt 14 loszulassen, es werden danach die Spannbacken zusammen mit ihrem Träger 25 am vertikalen Abschnitt 34 der Führungsbahnen 28, 29 wieder etwas nach oben gefahren und es wird der Ablagetisch 21 zusammen mit dem auf ihm abgelegten Materialabschnitt 14 in Materialvorschubrichtung 9 wieder in die von dem Gestell der Trennmaschine 1 entfernte Position zurückgefahren. Dieser Zustand ist aus Figur 9 ersichtlich.

Während dessen ist, wie Figur 6 zeigt, das schneidende Trum 2 des Sägebandes wieder nach oben aus dem durch das Material 5 eingenommenen Querschnitt herausgefahren.

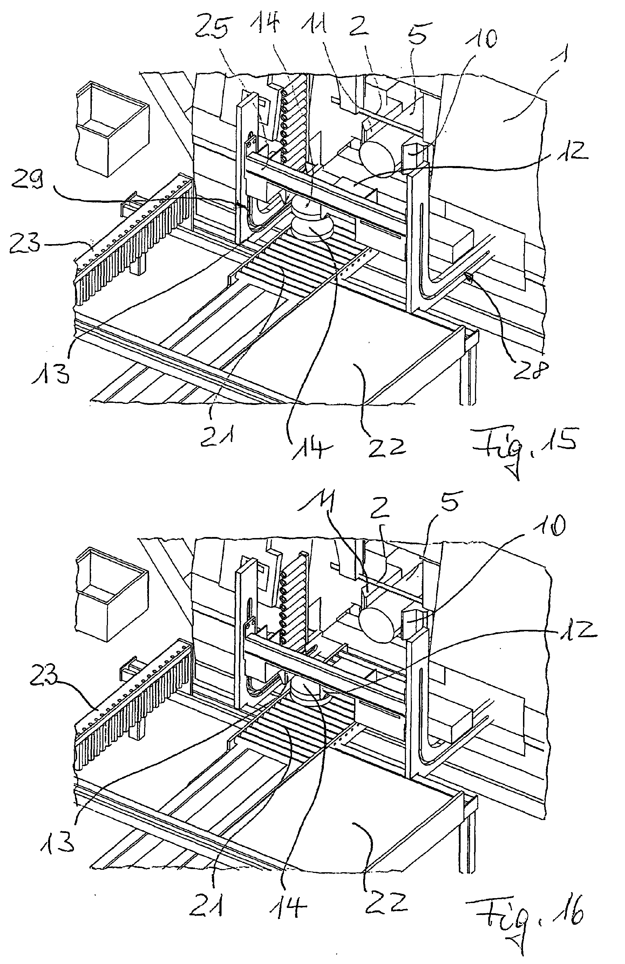

Jetzt kehren aus der in Figur 9 veranschaulichten Position die Spannbacken 12, 13 mit ihrem Träger 25 wieder entlang den Führungsbahnen 28, 29 in ihre Position unmittelbar neben der Schnittebene 8 zurück, wie dies aus Figur 10 ersichtlich ist, wobei in der anhand der Figur 4 beschriebenen Weise die Spannbacke 13 um einen kurzen Hub vom Material 5 fort verstellt wird, um nicht mit dem über die Schnittebene 8 vorstehenden Materialende zusammenzustoßen. Nunmehr ist, wie Figur 10 zeigt, der Weg für den Schieber 23 frei, um das Materialstück 14 vom Ablagetisch 21 auf die Tischplatte 22 zu verschieben. Diese Verschiebebewegung findet, wie aus Figur 11 ersichtlich, ihr Ende dann, wenn das Materialstück 14 am von dem Ablagetisch 21 am weitesten entfernten Ende der Tischplatte 22 angekommen ist.

Gleichzeitig konnte, wie ebenfalls aus Figur 11 ersichtlich, nunmehr das Werkstückmaterial 5 durch die Vorschubbacken 10, 11 um die Länge des als nächstes abzuschneidenden Materialabschnittes in Materialvorschubrichtung 9 vorgeschoben werden und es konnte dieser nächste Materialabschnitt durch die Spannbacken 12, 13 eingespannt werden.

Nunmehr beginnt, wie Figur 12 zeigt, der nächste schneidende Arbeitsgang und es kehrt der Schieber 23 in seine aus den Figuren 5 bis 9 ersichtliche Position jenseits der Kulissenwand 31 zurück.

Anhand der Figuren 5 bis 12 wurde der erfindungsgemäße Arbeitsgang anhand eines einzelnen Materialabschnittes 14 geschildert, der nach seiner Positionierung auf dem Ablagetisch 21 sogleich durch den Schieber 23 auf die Tischplatte 22 gebracht wurde.

Es besteht jedoch auch die Möglichkeit, einen solchen ersten Materialabschnitt 14 auf dem Ablagetisch 21 zu belassen, um auf diesem weitere Materialabschnitte zu stapeln. Diesen Vorgang zeigen die Figuren 13 bis 18 im Zusammenhang mit einem zweiten Materialabschnitt 14, wobei bezüglich dessen Handhabung zur Vermeidung von Wiederholungen auf die Beschreibung anhand der Figuren 5 bis 12 verwiesen wird. Hervorzuheben ist die Darstellung gemäß den Figuren 15 bis 18, die zeigt, wie der zweite Materialabschnitt gemäß Figur 15 zunächst durch entsprechende Positionierung der Spannbacken 12, 13 oberhalb des ersten Materialabschnittes gehalten und dann gemäß Figur 16 auf diesem abgesetzt wird. Im Anschluss daran zeigen die Figuren 17 und 18 analog den Figuren 10 und 11 die Verschiebung des aus zwei Materialabschnitten bestehenden Stapels durch den Schieber 23 von dem Ablagetisch 21 herunter auf die Tischplatte 22. Es versteht sich von selbst, dass alle mit den Arbeitsgängen verbundenen Bewegungen der Maschinenteile durch den zur der die Trennmaschine enthaltenden Anlage gehörenden Rechner gesteuert sind gerade auch im Hinblick auf den Querschnitt des Materials 5 und die Dicke der durch den Materialabschnitt 14 gebildeten Scheibe.

Selbstverständlich können auch höhere Stapel von Materialabschnitten 14 gebildet werden, wozu es lediglich erforderlich ist, den vertikalen Abschnitt 34 der Führungsbahnen 28, 29 entsprechend lang auszubilden.

Eine weitere Möglichkeit besteht darin, den Ablagetisch 21 ausgehend von seiner vom Gestell der Trennmaschine 1 am weitesten entfernten Position in Abhängigkeit vom Querschnitt des Materials rechnergesteuert auf unterschiedliche Positionen in Richtung auf die Trennmaschine 1 an diese heranzufahren, so dass sich auch in Materialvorschubrichtung 9 mehrere Materialabschnitte 14 nebeneinander auf dem Ablagetisch 21 absetzen lassen. Dies kann dann nach entsprechender Tätigkeit des Schiebers 23 zu dem aus Figur 19 ersichtlichen Ergebnis führen, gemäß dem in Materialvorschubrichtung mehrere Stapel von Materialabschnitten nebeneinander liegen. Figur 19 veranschaulicht aber auch, dass durch entsprechende Steuerung des Schiebers 23 quer zur Materialvorschubrichtung mehrere Stapel von Materialabschnitten nebeneinander auf der Tischplatte 22 positioniert werden können, in dem dann der Schieber 23 rechnergesteuert einen entsprechend kürzeren Hub über die Tischplatte 22 ausführt.

Figur 19 veranschaulicht darüber hinaus auch die an sich bekannte Arbeitsweise beim Abschneiden langer Materialabschnitte 15. Diese befinden sich während des schneidenden Arbeitsganges bereits zumindest teilweise auf der kurzen Rollenbahn 19 und gegebenenfalls auf der den Ablagetisch 21 bildenden Rollenbahn, wobei letztere auch eine zumindest teilweise in Richtung auf die Trennmaschine 1 gefahrene Position haben kann. Ist der Materialabschnitt 15 abgetrennt, so kann er durch entsprechenden Antrieb der Rollenbahn 19 und der den Ablagetisch 21 bildenden Rollenbahn in Materialvorschubrichtung weitergefördert werden auf eine sich an das Tischgestell 20 anschließende Sortiereinrichtung 37, durch die mittels eines quer zur Materialvorschubrichtung bewegbaren Schiebers 38 die Materialstücke beidseits ihres Vorschubweges gesammelt bzw. sortiert werden können.

Figur 19 veranschaulicht schließlich, wie diese Vorschubbewegung für Materialabschnitte 15 durch die mit der Spannbacke 13 verbundene Rollenbahn 35 geführt ist, wobei entgegen der Darstellung gemäß Figur 19 auch zur weiteren Unterstützung noch die am Schieber 23 angeordnete Rollenbahn 24 in eine mit der Rollenbahn 35 fluchtende Position gebracht werden kann.

Gemäß der bisherigen Darstellung und Beschreibung insbesondere anhand der Figur 4 war es so, dass die Spannbacken 12, 13 auf einem Träger 25 angeordnet sind, der seinerseits mit seinen Enden in Eingriff mit den Führungsbahnen 28, 29 ist.

Eine andere Möglichkeit kann gemäß Figur 20 und 21 darin bestehen, dass die Spannbacken 12, 13 je über eine vertikale Stütze 38, 39 unterhalb eines Trägers 40 angeordnet sind und dass die freien unteren Enden der Stützen 38, 39 mit je einer der den Spannbacken 12, 13 zugeordneten Führungsbahnen 28, 29 in Eingriff sind. Dabei zeigt Figur 20, dass dieser Eingriff durch an den Enden der Stützen 38, 39 drehbar gelagerte und mit den die Schlitze 28, 29 bildenden Wandungen 41 sowie den Kulissenwänden 42 in Wirkverbindung stehende Rollen 43, 44 gegeben ist.

Die Figuren 20 und 21 zeigen auch in vereinfachter Darstellung den Antrieb zum Verfahren der aus den Spannbacken 12, 13, den Stützen 38, 39 und den Träger 40 gebildeten Einheit entlang der in den Kulissenwänden 30, 31 ausgebildeten Führungsbahnen 28, 29. Dazu sind die Kulissenwände 30, 31 jenseits des oberen Endes des vertikalen Abschnittes 34 der Führungsbahnen 28, 29 durch eine horizontale, sich quer zur Materialvorschubrichtung 9 erstreckende Brücke 45 miteinander verbunden und es enthält die Brücke drehbar gelagert eine durch einen Motor 46 angetriebene Welle 47, die auf den den Spannbacken 12, 13 abgewandten Außenseiten der Kulissenwände 30, 31 je ein Umlenkrad 48 für ein entlang der zugeordneten Führungsbahn 28, 29 umlaufend geführtes Zugmittel 49 trägt. Mit diesen Zugmitteln 49 sind die Längsenden der Stützen 38, 39 wenigstens mittelbar verbunden, wie in Figur 21 bei 50 angedeutet, so dass durch entsprechenden Antrieb der Welle 47 über die Zugmittel 49 die Bewegung der Spannbacken 12, 13 entlang der Führungsbahnen 28, 29 erzeugt werden kann.

Die Figuren 20 und 21 veranschaulichen auch sehr gut, wie die mit ihrem einen, hier hinten liegenden Ende mit der Trennmaschine 1 verbundenen Kulissenwände 30, 31 an ihrem anderen, unteren Ende Anschlussplatten 51, 52 aufweisen, über die sie mit dem Tischgestell 20 verschraubt sind.

Die in den Figuren 20 und 21 dargestellte Konstruktion für den Antrieb der Bewegung der Spannbacken 12, 13 entlang den Führungsbahnen 28, 29 eignet sich auch gleichermaßen für den Bewegungsantrieb der in den Figuren 1 bis 19, insbesondere Figur 4 dargestellten Einheit aus Spannbacken 12, 13 und Träger 25. Bei den Figuren 1 bis 19 ist die Darstellung dieser Konstruktion jedoch aus Gründen der Anschaulichkeit der zeichnerischen Darstellung unterlassen.

## Patentansprüche

1. Verfahren zum Abtransport der mit einer Trennmaschine von stangenförmigem Werkstückmaterial abgetrennten Abschnitte, wobei das auf einem Maschinentisch aufliegende Material während des Schnittes mit seinem in Vorschubrichtung des Materials hinter der Schnittebene gelegenen, abzutrennenden Abschnitt ausschließlich hinter der Schnittebene zwischen Spannbacken eingespannt wird,
**dadurch gekennzeichnet,**
**dass** nach Beendigung des Schnittes der abgetrennte Abschnitt (14) durch die Spannbacken (12, 13) in Materialvorschubrichtung (9) von der Schnittebene (8) fort bewegt sowie um eine quer zur Materialvorschubrichtung (9) gelegene Achse geschwenkt wird derart, dass seine jüngste Schnittfläche im Wesentlichen horizontal gelegen und nach unten gerichtet ist, und dass der Abschnitt (14) anschließend durch die Spannbacken (12, 13) über eine im Wesentlichen vertikal nach unten gerichtete Bewegung auf einer Ablage (21) abgesetzt wird.

2. Verfahren nach Anspruch 1,
**dadurch gekennzeichnet,**
**dass** der auf der Ablage (21) befindliche Materialabschnitt (14) mit dieser in Materialvorschubrichtung (9) von der Schnittebene (8) weiter fortgefahren wird.

3. Verfahren nach Anspruch 1 oder 2,
**dadurch gekennzeichnet,**
**dass** der auf der Ablage (21) befindliche Materialabschnitt (14) durch eine horizontal und quer zur Materialvorschubrichtung (9) gerichtete Bewegung zu einer vorbestimmten Sammelposition gebracht wird.

4. Verfahren nach einem der Ansprüche 1 bis 3,
**dadurch gekennzeichnet,**
**dass** auf der Ablage (21) mehrere Materialabschnitte (14) aufeinander abgesetzt und anschließend gemeinsam zur Sammelposition gebraucht werden.

5. Verfahren nach einem der Ansprüche 1 bis 4,
**dadurch gekennzeichnet,**
**dass** die Materialabschnitte (14) auf der Ablage (21) auf in Materialvorschubrichtung (9) nebeneinander gelegenen Ablagepositionen abgesetzt und anschließend gemeinsam zur Sammelposition gebracht werden.

6. Vorrichtung zum Abtransport der mit einer Trennmaschine von stangenförmigem Werkstückmaterial abgetrennten Abschnitte, wobei das auf einem Maschinentisch aufliegende Material während des Schnittes mit seinem in Vorschubrichtung des Materials hinter der Schnittebene gelegenen, abzutrennenden Abschnitt zwischen wenigstens zwei quer zur Materialvorschubrichtung öffen- und schließbaren sowie während des Schnittes in Materialvorschubrichtung ausschließlich hinter der Schnittebene angeordneten Spannbacken eingespannt ist, zur Durchführung des Verfahrens nach einem der Ansprüche 1 bis 5,
**dadurch gekennzeichnet,**
**dass** nach Beendigung des Schnittes die Spannbacken (12, 13) gemeinsam mit dem zwischen ihnen eingespannten, abgetrennten Abschnitt (14) entlang einer Führungsbahn (28, 29) in Materialvorschubrichtung (9) von der Schnittebene (8) fort verfahrbar und um eine quer zur Materialvorschubrichtung (9) gelegene Achse schwenkbar sind derart, dass der abgetrennte Abschnitt (14) mit seiner jüngsten Schnittfläche auf einem Ablagetisch (21) durch Öffnen der Spannbacken (12, 13) absetzbar ist, und dass die Spannbacken (12, 13) danach entlang der Führungsbahn (28, 29) wieder in ihre Position neben der Schnittebene (8) zurückfahrbar und der nächstfolgend abzutrennende Materialabschnitt (14) durch die Spannbacken (12, 13) einspannbar ist.

7. Vorrichtung nach Anspruch 6,
**dadurch gekennzeichnet,**
**dass** die Führungsbahn (28, 29) einen sich in Materialvorschubrichtung (9) erstreckenden, im Wesentlichen horizontalen Abschnitt (32), einen sich daran anschließenden bogenförmig nach oben verlaufenden Abschnitt (33) und einen sich an diesen anschließenden im Wesentlichen vertikalen Abschnitt (34) aufweist.

8. Vorrichtung nach Anspruch 6 oder 7,
**dadurch gekennzeichnet,**
**dass** in Materialvorschubrichtung (9) hinter der Schnittebene (8) mit dem Gestell der Trennmaschine (1) jeder Spannbacke (12, 13) zugeordnet eine Führungsbahn (28, 29) verbunden ist.

9. Vorrichtung nach Anspruch 8,
**dadurch gekennzeichnet,**
**dass** die den Spannbacken (12, 13) zugeordneten Führungsbahnen (28, 29) als Schlitze in mit dem Gestell der Trennmaschine (1) verbundenen Kulissenwänden (30, 31) enthalten sind.

10. Vorrichtung nach einem der Ansprüche 6 bis 9,
**dadurch gekennzeichnet,**
**dass** die Spannbacken (12, 13) an einem sich im Wesentlichen quer zur Materialvorschubrichtung (9) erstreckenden, außerhalb des Bereichs des maximalen Werkstückquerschnittes gelegenen Träger (25, 40) angeordnet sind.

11. Vorrichtung nach Anspruch 10,
**dadurch gekennzeichnet,**
**dass** die Spannbacken (12, 13) auf dem Träger (25) angeordnet sind und dass die Längsenden des Trägers (25) je mit einer der den Spannbacken (12, 13) zugeordneten Führungsbahnen (28, 29) in verfahrbarem Eingriff sind.

12. Vorrichtung nach Anspruch 10,
**dadurch gekennzeichnet,**
**dass** die Spannbacken (12, 13) je über eine vertikale Stütze (38, 39) unterhalb des Trägers (40) angeordnet sind, und dass die freien unteren Enden der Stützen (38, 39) je mit einer der den Spannbacken (12, 13) zugeordneten Führungsbahnen (28, 29) in verfahrbarem Eingriff sind.

13. Vorrichtung nach einem der Ansprüche 11 oder 12,
**dadurch gekennzeichnet,**
**dass** der verfahrbare Eingriff über an den Längsenden des Trägers (25) bzw. den freien Enden der Stützen (38, 39) drehbar gelagerte und mit den durch die Schlitze gebildeten Wandungen (41) sowie den Kulissenwänden (42) in Wirkverbindung stehenden Rollen (43, 44) gegeben ist.

14. Vorrichtung nach einem der Ansprüche 6 bis 13,
**dadurch gekennzeichnet,**
**dass** die Kulissenwände (30, 31) jenseits des oberen Endes des im Wesentlichen vertikalen Abschnittes (34) der Führungsbahn (28, 29) durch eine horizontale, sich quer zur Materialvorschubrichtung (9) erstreckende Brücke (45) miteinander verbunden sind, dass in der Brücke (45) eine motorgetriebene Welle (47) drehbar gelagert ist, dass die Welle (47) auf den den Spannbacken (12, 13) abgewandten Außenseiten der Kulissenwände (30, 31) je ein Umlenkrad (48) für ein entlang der zugeordneten Führungsbahn (28, 29) umlaufend geführtes Zugmittel (49) trägt, und dass mit den Zugmitteln (49) die Längsenden des Trägers (25) bzw. die Enden der Stützen (38, 39) wenigstens mittelbar verbunden sind zur Erzeugung der Bewegung der Spannbacken (12, 13) zwischen ihrer dem Schnitt des Materials (5) zugeordneten Stellung einerseits und der dem Absetzen eines abgetrennten Abschnittes (14) auf dem Ablagetisch (21) andererseits.

15. Vorrichtung nach einem der Ansprüche 6 bis 14,
**dadurch gekennzeichnet,**
**dass** der Ablagetisch (21) in Vorschubrichtung (9) des Materials (5) angetrieben horizontal verfahrbar und längs positionierbar ist.

16. Vorrichtung nach Anspruch 15,
**dadurch gekennzeichnet,**
**dass** die Oberfläche des Ablagetisches (21) mit der Oberfläche des Maschinentisches (7) fluchtet.

17. Vorrichtung nach Anspruch 15 oder 16,
**dadurch gekennzeichnet,**
**dass** die Verfahrbarkeit des Ablagetisches (21) sich erstreckt zwischen einer unmittelbar an die Auflage (7, 19) des Materials (5) innerhalb der Trennmaschine (1) anschließenden Stellung und einer von dieser einen Abstand aufweisenden Stellung, bei der seine der Materialauflage (7, 19) zugewandte Abschlusskante in Materialvorschubrichtung (9) gesehen hinter dem Ende der Kulissenwände (30, 31) steht.

18. Vorrichtung nach einem der Ansprüche 15 bis 17,
**dadurch gekennzeichnet,**
**dass** der Ablagetisch (21) durch eine auf einem feststehenden Tischgestell (20) angetrieben hin- und herverfahrbar angeordnete Rollenbahn gebildet ist, deren Rollen um horizontal und quer zur Materialvorschubrichtung (9) gelegene Achsen drehbar sind.

19. Vorrichtung nach Anspruch 18,
**dadurch gekennzeichnet,**
**dass** die Rollenbahn (21) eine enge Rollenteilung aufweist.

20. Vorrichtung nach einem der Ansprüche 6 bis 19,
**dadurch gekennzeichnet,**
**dass** das Tischgestell (20) auf wenigstens einer Seite neben dem Ablagetisch (21) gegebenenfalls in dessen von der Trennmaschine (1) fort verfahrenen Position eine Tischplatte (22) sowie einen quer zur Materialvorschubrichtung (9) horizontal motorgetrieben bewegbaren Schieber (23) für die auf dem Ablagetisch (21) abgesetzten Werkstückabschnitte (14) aufweist, und dass der Schieber (23) von einer auf der der Tischplatte (22) gegenüberliegenden Seite vom Ablagetisch (21) beabstandeten Position bis zu einer Position im Bereich der dem Ablagetisch (21) abgewandten Kante der Tischplatte (22) verfahrbar ist.

21. Vorrichtung nach Anspruch 20,
**dadurch gekennzeichnet,**
**dass** die wirksame Fläche des Schiebers (23) durch eine sich in Materialvorschubrichtung (9) erstreckende Rollenbahn (24) gebildet ist, deren Rollen um vertikal und quer zur Materialvorschubrichtung (9) gelegenen Achsen drehbar sind.

22. Vorrichtung nach Anspruch 21,
**dadurch gekennzeichnet,**
**dass** die Rollenbahn (24) eine enge Rollenteilung aufweist.

23. Vorrichtung nach einem der Ansprüche 6 bis 22,
**dadurch gekennzeichnet,**
**dass** eine Spannbacke (13) quer zur Materialvorschubrichtung (9) feststehend und die andere Spannbacke (12) zum Öffnen und Schließen des Spannzustandes verschiebbar ist.

24. Vorrichtung nach einem der Ansprüche 6 bis 22,
**dadurch gekennzeichnet,**
**dass** eine Spannbacke (13) durch eine kurze, quer zur Materialvorschubrichtung (9) gehende Hubbewegung vom Werkstückmaterial (5) lösbar und die andere Spannbacke (12) zum Öffnen und Schließen des Spannzustandes verschiebbar ist.

25. Vorrichtung nach Anspruch 23 oder 24,
**dadurch gekennzeichnet,**
**dass** von der feststehenden bzw. der mit kurzem Hub bewegbaren Spannbacke (13) eine sich von der Schnittebene (8) der Trennmaschine (1) forterstreckende Rollenbahn (35) getragen ist, deren Rollen um vertikal und quer zur Materialvorschubrichtung (9) gelegene Achsen drehbar sind, wobei die vertikale Breite der Rollenbahn (35) der Höhe der zugeordneten Spannbacke (13) und ihre Länge im Wesentlichen der Ausdehnung der Kulissenwände (30, 31) in Materialvorschubrichtung (9) entspricht.

## Claims

1. A method for removing pieces cut from a rod-shaped workpiece material using a cutting machine, where the material, lying on a machine table during the cutting, with the piece to be cut lying behind the cutting plane in the feed direction, is clamped solely behind the cutting plane between gripping jaws,
**characterised in that**
after completion of the cut, the separated piece (14) is moved away from the cutting plane (8) in the material-feed direction (9) by using the gripping jaws (12, 13), and is pivoted about an axis positioned crosswise to the material-feed direction (9) in such a way that the most recently cut surface of the cut piece is essentially lying horizontally, facing in the downward direction, and that subsequently the cut piece (14) is placed onto a temporary storage surface (21) by using the gripping jaws (12, 13), through a movement essentially vertical in the downward direction.

2. A method according to claim 1,
**characterised in that**
the material piece (14) located on the temporary storage surface (21) is advanced farther from the cutting plane (8) in the material-feed direction (9) together with the temporary storage surface (21).

3. A method according to claim 1 or 2,
**characterised in that**
the material piece (14) located on the temporary storage surface (21) is brought to a predetermined collection position through a motion that is horizontal and crosswise to the material-feed direction (9).

4. A method according to one of the claims 1 through 3,
**characterised in that**
several material pieces (14) are placed on top of each other on the temporary storage surface (21) and are subsequently together brought to the collection position.

5. A method according to one of the claims 1 to 4,
**characterised in that**
the material pieces (14) on the temporary storage surface (21) are placed in temporary storage positions located next to one another in the material-feed direction (9), and are subsequently together brought to the collection position.

6. A device for removing pieces cut from a rod-shaped workpiece material using a cutting machine, where the material, lying on a machine table during the cutting, with the piece to be cut lying behind the cutting plane in the feed direction, is clamped between at least two gripping jaws located crosswise to the material-feed direction, that can be opened and closed, and that during the cutting are located solely behind the cutting plane in the material-feed direction, for carrying out the method according to one of the claims 1 through 5,
**characterised in that**
after the completion of the cut, the gripping jaws (12, 13) together with the separated piece (14) clamped between them, can be moved away from the cutting plane (8) in the material-feed direction (9) along a guide track (28, 29), and can be pivoted about an axis positioned crosswise to the material-feed direction (9) in such a way that the most recently cut surface of the cut piece (14) can be placed onto a temporary storage table (21) by opening the gripping jaws (12, 13), and that afterwards the gripping jaws (12, 13) can be returned again to their position next to the cutting plane (8), and the next material piece (14) to be cut can be clamped using the gripping jaws (12, 13).

7. A device according to claim 6,
**characterised in that**
the guide track (28, 29) has a section (32) extending essentially horizontally in the material-feed direction (9), a connecting section (33) running in an upward curve, and an essentially vertical section connected to it (34).

8. A device according to claim 6 or 7,
**characterised in that**
associated with each gripping jaw (12, 13), a guide track (28, 29) is connected to the frame of the cutting machine (1) behind the cutting plane (8) in the material-feed direction (9).

9. A device according to claim 8,
**characterised in that**
the guide tracks (28, 29) associated with the gripping jaws (12, 13) consist of slots in the walls of the slider (30, 31) connected to the frame of the cutting machine (1).

10. A device according to one of the claims 6 through 9,
**characterised in that**
the gripping jaws (12, 13) are arranged on a support (25, 40) located outside of the area of the maximum workpiece cross-section, extending essentially crosswise to the material- feed direction (9).

11. A device according to claim 10,
**characterised in that**
the gripping jaws (12, 13) are arranged on the support (25) and that each of the longitudinal ends of the support (25) is associated in a moveable engagement with one of the guide tracks (28, 29) associated with each gripping jaw (12, 13).

12. A device according to claim 10,
**characterised in that**
each of the gripping jaws (12, 13) is arranged on a vertical stanchion (38, 39) below the support (40), and that each of the free, lower ends of the stanchions (38, 39) is associated in a moveable engagement with one of the guide tracks (28, 29) associated with each gripping jaw (12, 13).

13. A device according to claim 11 or 12,
**characterised in that**
the moveable engagement is given by rollers (43, 44) that rotate on bearings at the longitudinal ends of the support (25) or at the free ends of the stanchions (38, 39), and that the rollers are in an effective connection with the walls (41) that are formed by the slots, and with the slider walls (42).

14. A device according to one of the claims 6 to 13,
**characterised in that**
the slider walls (30, 31) beyond the upper ends of the essentially vertical section (34) of the guide track (28, 29) are connected with each other by a horizontal bridge (45) that extends crosswise to the material-feed direction (9), and that located in said bridge is a motor-driven shaft (47) that rotates on bearings, and that the shaft (47), on each of the outer sides of the slider walls (30, 31) facing away from the gripping jaws (12, 13), supports a return pulley (48) for means of traction (49) that are guided along the associated guide tracks (28, 29) in a circular manner, and that through the means of traction (49) the longitudinal ends of the support (25) or the ends of the stanchions (38, 39) are connected, at least indirectly, to create the movement of the gripping jaws (12, 13) between their position that is associated with the cutting of the material (5), on the one hand, and the placement of a cut piece (14) onto the temporary storage table (21), on the other.

15. A device according to one of the claims 6 to 14,
**characterised in that**
the temporary storage table (21) is driven so it can be moved horizontally and be positioned longitudinally in the feed direction (9) of the material (5).

16. A device according to claim 15,
**characterised in that**
the upper surface of the temporary storage table (21) is in alignment with the upper surface of the machine table (7).

17. A device according to claim 15 or 16,
**characterised in that**
the mobility of the temporary storage table (21) extends between a position directly adjacent to the support surface (7, 19) of the material (5) within the cutting machine (1) and a position offset from this, at which its terminating end, which is facing the support surface (7, 19) as viewed in the material-feed direction (9), is located behind the end of the slider walls (30, 31).

18. A device according to one of the claims 15 to 17,
**characterised in that**
the temporary storage table (21) is built using a roller conveyor that is arranged on a fixed table frame (20) that is driven back and forth, and whose rollers rotate about an axis that is horizontal and crosswise to the material-feed direction (9) axis.

19. A device according to claim 18,
**characterised in that**
the roller conveyor (21) has closely spaced rollers.

20. A device according to one of the claims 6 to 19,
**characterised in that**
the table frame (20) has, at least on one side, a tabletop (22) alongside the temporary storage table (21), if necessary in a position offset from the cutting machine (1), and a motor-driven slide gate (23) that can be moved horizontally crosswise to the material-feed direction (9) for the cut work pieces (14) that are deposited onto the temporary storage table (21), and that the slide gate (23) can be moved from an offset position on the side of the temporary storage table (21) that is lying opposite of the table top (22), to a position in the area of the edge of the table top (22) that is facing away from the temporary storage table (21).

21. A device according to claim 20,
**characterised in that**
the effective surface of the slide gate (23) is formed by a roller conveyor extending in the material-feed direction (9), whose rollers rotate about axes that extend vertically and crosswise to the material-feed direction (9).

22. A device according to claim 21,
**characterised in that** the roller conveyor (24) has closely spaced rollers.

23. A device according to one of the claims 6 to 22,
**characterised in that**
one of the gripping jaws (13) is attached crosswise to the material-feed direction (9) and the other gripping jaw (12) can be moved to open and close the state of the clamp.

24. A device according to one of the claims 6 to 22,
**characterised in that**
the gripping jaw (13) can be removed by a short stroke away from the workpiece material (5) and crosswise to the material-feed direction (9) and the other gripping jaw (12) can be moved to open and close the state of the clamp.

25. A device according to claims 23 or 24,
**characterised in that**
a roller conveyor (35), whose rollers rotate about axes that are vertical and crosswise to the material-feed direction (9) and that extends from the cutting plane (8) of the cutting machine (1), is supported by the gripping jaw (13), which is either fixed or movable with a short stroke, where the vertical width of the roller conveyor (35) corresponds to the height of the associated gripping jaw (13) and its length corresponds essentially to the dimension of the slider walls (30, 31) in the material-feed direction (9).

## Revendications

1. Procédé pour l'évacuation de tronçons détachés d'un matériau d'usinage en forme de barre par une machine à tronçonner, sachant que le matériau reposant sur une table de machine est, pendant la coupe, par son tronçon à détacher situé en aval du plan de coupe dans la direction d'avancement du matériau, serré exclusivement en aval du plan de coupe entre des mors de serrage,
**caractérisé en ce que**, une fois la coupe achevée, le tronçon détaché (14) est, par les mors de serrage (12, 13), déplacé en éloignement du plan de coupe (8) dans la direction (9) d'avancement du matériau et pivoté autour d'un axe transversal à la direction (9) d'avancement du matériau, de telle sorte que sa face de coupe la plus récente se trouve essentiellement à l'horizontale et est orientée vers le bas, et **en ce que** le tronçon (14) est ensuite, par les mors de serrage (12, 13) déposé sur une table de réception (21) au moyen d'un mouvement orienté essentiellement verticalement vers le bas.

2. Procédé selon la revendication 1, **caractérisé en ce que** le tronçon de matériau (14) qui se trouve sur la table de réception (21) est déplacé avec celle-ci plus en éloignement du plan de coupe (8) dans la direction (9) d'avancement du matériau.

3. Procédé selon la revendication 1 ou 2, **caractérisé en ce que** le tronçon de matériau (14) qui se trouve sur la table de réception (21) est amené dans une position prédéfinie de collecte par un mouvement orienté horizontalement et transversalement à la direction (9) d'avancement du matériau.

4. Procédé selon l'une des revendications 1 à 3, **caractérisé en ce que** plusieurs tronçons de matériau (14) sont déposés les uns au-dessus des autres sur la table de réception (21) puis sont amenés conjointement dans la position de collecte.

5. Procédé selon l'une des revendications 1 à 4, **caractérisé en ce que** les tronçons de matériau (14) sont déposés sur la table de réception (21) dans des positions de dépose juxtaposées dans la direction (9) d'avancement du matériau, puis sont amenés conjointement dans la position de collecte.

6. Dispositif pour l'évacuation de tronçons détachés d'un matériau d'usinage en forme de barre par une machine à tronçonner, sachant que le matériau reposant sur une table de machine est, pendant la coupe, par son tronçon à détacher situé en aval du plan de coupe dans la direction d'avancement du matériau, serré entre au moins deux mors de serrage qui peuvent être ouverts et fermés transversalement à la direction d'avancement du matériau et qui, pendant la coupe, sont disposés exclusivement en aval du plan de coupe dans la direction d'avancement du matériau, pour la mise en oeuvre du procédé selon l'une des revendications 1 à 5,
**caractérisé en ce que**, une fois la coupe achevée, les mors de serrage (12, 13) peuvent être, conjointement avec le tronçon détaché (14) serré entre eux, déplacés le long d'une voie de guidage (28, 29) en éloignement du plan de coupe (8) dans la direction (9) d'avancement du matériau et pivotés autour d'un axe transversal à la direction (9) d'avancement du matériau, de telle sorte que le tronçon détaché (14) peut être déposé par sa face de coupe la plus récente sur une table de réception (21) en ouvrant les mors de serrage (12, 13), et **en ce que** les mors de serrage (12, 13) peuvent ensuite être ramenés, le long de la voie de guidage (28, 29), dans leur position à côté du plan de coupe (8), et le tronçon (14) suivant de matériau à détacher peut être serré par les mors de serrage (12, 13).

7. Dispositif selon la revendication 6, **caractérisé en ce que** la voie de guidage (28, 29) présente une partie essentiellement horizontale (32) s'étendant dans la direction (9) d'avancement du matériau, une partie (33) se raccordant à la partie (32) et s'étendant en coude vers le haut, et une partie essentiellement verticale (34) se raccordant à cette partie (33).

8. Dispositif selon la revendication 6 ou 7, **caractérisé en ce qu'**une voie de guidage (28, 29) est, en étant associée à chaque mors de serrage (12, 13), assemblée au bâti de la machine à tronçonner (1) en aval du plan de coupe (8) dans la direction (9) d'avancement du matériau.

9. Dispositif selon la revendication 8, **caractérisé en ce que** les voies de guidage (28, 29) associées aux mors de serrage (12, 13) sont contenues sous la forme de fentes dans des parois de coulisse (30, 31) assemblées au bâti de la machine à tronçonner (1).

10. Dispositif selon l'une des revendications 6 à 9, **caractérisé en ce que** les mors dé serrage (12, 13) sont disposés sur un support (25, 40) s'étendant essentiellement transversalement à la direction (9) d'avancement du matériau et situé en dehors de la région de la section maximale de la pièce de matériau.

11. Dispositif selon la revendication 10, **caractérisé en ce que** les mors de serrage (12, 13) sont disposés sur le support (25), et **en ce que** les extrémités longitudinales du support (25) se trouvent respectivement en engagement mobile avec une des voies de guidage (28, 29) associées aux mors de serrage (12, 13).

12. Dispositif selon la revendication 10, **caractérisé en ce que** les mors de serrage (12, 13) sont respectivement disposés en dessous du support (40) par l'intermédiaire d'un montant vertical (38, 39), et **en ce que** les extrémités libres inférieures des montants (38, 39) se trouvent respectivement en engagement mobile avec une des voies de guidage (28, 29) associées aux mors de serrage (12, 13).

13. Dispositif selon l'une des revendications 11 ou 12, **caractérisé en ce que** l'engagement mobile est obtenu au moyen de galets (43, 44) qui sont montés à rotation aux extrémités longitudinales du support (25) ou respectivement aux extrémités libres des montants (38, 39) et qui se trouvent en liaison fonctionnelle avec les parois (41) formées par les fentes ainsi qu'avec les parois de coulisse (42).

14. Dispositif selon l'une des revendications 6 à 13, **caractérisé en ce que** les parois de coulisse (30, 31) sont reliées entre elles, au-delà de l'extrémité supérieure de la partie essentiellement verticale (34) de la voie de guidage (28, 29), par un pont horizontal (45) s'étendant transversalement à la direction (9) d'avancement du matériau, **en ce qu'**un arbre motorisé (47) est monté à rotation dans le pont (45), **en ce que** l'arbre (47) porte, sur les côtés extérieurs des parois de coulisse (30, 31) qui sont éloignés des mors de serrage (12, 13), une roue de renvoi respective (48) pour un moyen de traction (49) guidé en circulation le long de la voie de guidage associée (28, 29), et en ces que les extrémités longitudinales du support (25) ou respectivement les extrémités des montants (38, 39) sont au moins indirectement reliées aux moyens de traction (49) afin de produire le mouvement des mors de serrage (12, 13) entre leur position associée à la coupe du matériau (5) d'une part, et celle associée à la dépose d'un tronçon détaché (14) sur la table de réception (21).

15. Dispositif selon l'une des revendications 6 à 14, **caractérisé en ce que** la table de réception (21) peut, en étant entraînée dans la direction d'avancement (9) du matériau (5), être déplacée horizontalement et positionnée longitudinalement.

16. Dispositif selon la revendication 15, **caractérisé en ce que** la surface de la table de réception (21) est alignée avec la surface de la table de machine (7).

17. Dispositif selon la revendication 15 ou 16, **caractérisé en ce que** la faculté de déplacement de la table de réception (21) s'étend entre une position se raccordant directement à la surface (7, 19) portant le matériau (5) à l'intérieur de la machine à tronçonner (1), et une position distante de la précédente et dans laquelle son bord terminal tourné vers la surface porteuse (7, 19) se trouve, considéré dans la direction (9) d'avancement du matériau, en aval de l'extrémité des parois de coulisse (30,31).

18. Dispositif selon l'une des revendications 15 à 17, **caractérisé en ce que** la table de réception (21) est formée par un convoyeur à rouleaux, qui est disposé sur un bâti de table fixe (20) en pouvant être déplacé en va-et-vient de manière entraînée, et dont les rouleaux sont rotatifs autour d'axes horizontaux et transversaux à la direction (9) d'avancement du matériau.

19. Dispositif selon la revendication 18, **caractérisé en ce que** le convoyeur à rouleaux (21) présente un étroit écartement des rouleaux.

20. Dispositif selon l'une des revendications 6 à 19, **caractérisé en ce que** le bâti de table (20) présente un plateau (22) sur au moins un côté latéralement à la table de réception (21), éventuellement dans la position de cette dernière déplacée en éloignement de la machine à tronçonner (1), et un poussoir (23) pouvant être déplacé de manière motorisée horizontalement, transversalement à la direction (9) d'avancement du matériau, pour les tronçons de matériau (14) déposés sur la table de réception (21), et **en ce que** le poussoir (23) peut être déplacé depuis une position distante de la table de réception (21) sur le côté opposé au plateau (22) jusqu'à une position dans la région du bord du plateau (22) qui est éloigné de la table de réception (21).

21. Dispositif selon la revendication 20, **caractérisé en ce que** la surface active du poussoir (23) est formée par un convoyeur à rouleaux (24) qui s'étend dans la direction (9) d'avancement du matériau et dont les rouleaux sont rotatifs autour d'axes verticaux et transversaux à la direction (9) d'avancement du matériau.

22. Dispositif selon la revendication 21, **caractérisé en ce que** le convoyeur à rouleaux (24) présente un étroit écartement des rouleaux.

23. Dispositif selon l'une des revendications 6 à 22, **caractérisé en ce que**, transversalement à la direction (9) d'avancement du matériau, un mors de serrage (13) est fixe et l'autre mors de serrage (12) est mobile en translation afin d'ouvrir et de fermer l'état de serrage.

24. Dispositif selon l'une des revendications 6 à 22, **caractérisé en ce qu'**un mors de serrage (13) peut être libéré du matériau d'usinage (5) par une courte course de déplacement s'étendant transversalement à la direction (9) d'avancement du matériau, et l'autre mors de serrage (12) est mobile en translation afin d'ouvrir et de fermer l'état de serrage.

25. Dispositif selon la revendication 23 ou 24, **caractérisé en ce que** le mors de serrage (13) fixe ou respectivement mobile d'une courte course porte un convoyeur à rouleaux (35) qui s'étend en éloignement du plan de coupe (8) de la machine à tronçonner (1) et dont les rouleaux sont rotatifs autour d'axes verticaux et transversaux à la direction (9) d'avancement du matériau, sachant que la largeur verticale du convoyeur à rouleaux (35) correspond à la hauteur du mors de serrage associé (13) et que sa longueur correspond essentiellement à l'étendue des parois de coulisse (30, 31) dans la direction (9) d'avancement du matériau.
